# EUROPÄISCHE PATENTSCHRIFT

(11) **EP 4 095 492 B1**
(45) Veröffentlichungstag und Bekanntmachung des Hinweises auf die Patenterteilung: **27.09.2023**
(21) Anmeldenummer: 22159413.8
(22) Anmeldetag: 01.03.2022
(51) Int. Cl.: G01F 1/84, G01F 25/10

(54) **VERFAHREN ZUM BETREIBEN EINES CORIOLIS-MASSEDURCHFLUSSMESSGERÄTS UND ENTSPRECHENDES CORIOLIS-MASSEDURCHFLUSSMESSGERÄT**
METHOD FOR OPERATING A CORIOLIS FLOW METER AND RELATED CORIOLIS FLOW METER
PROCÉDÉ DE FONCTIONNEMENT D'UN DÉBITMÈTRE MASSIQUE À EFFET CORIOLIS ET DÉBITMÈTRE MASSIQUE À EFFET CORIOLIS CORRESPONDANT

(30) Priorität: 26.05.2021 DE 102021113609; 28.06.2021 DE 102021116633
(43) Veröffentlichungstag der Anmeldung: 30.11.2022
(73) Patentinhaber: Krohne Messtechnik GmbH, 47058 Duisburg (DE)
(72) Erfinder: STORM, Ralf, 45136 Essen (DE); KUNZE, Johannes, 45468 Mülheim (DE); VOLKER, Stegemann, 44791 Bochum (DE); ERKELENZ, Alexander, 47249 Duisburg (DE)
(74) Vertreter: Gesthuysen Patentanwälte

(56) Entgegenhaltungen:
- EP-A2- 0 902 262
- DE-A1- 4 323 028
- US-A1- 2008 156 108
- US-A1- 2013 141 262
- US-B1- 6 505 131

## Beschreibung

Die Erfindung betrifft Verfahren zum Betreiben eines Coriolis-Massedurchflussmessgeräts, wobei das Coriolis-Massedurchflussmessgerät wenigstens ein Messrohr, wenigstens einen Schwingungserzeuger, wenigstens zwei Schwingungsaufnehmer und wenigstens eine Steuer- und Auswerteeinheit aufweist, wobei das Messrohr von einem Medium durchströmbar ist, wobei der Schwingungserzeuger das Messrohr in eine Schwingung mit einer Anregungsfrequenz anregt, wobei der erste und der zweite Schwingungsaufnehmer die Schwingungen des Messrohrs einlaufseitig und auslaufseitig erfassen und als erstes Schwingungssignal mit einer ersten Schwingungssignal-Phasenlage und als zweites Schwingungssignal mit einer zweiten Schwingungssignal-Phasenlage bereitstellen, wobei die Steuer- und Auswerteeinheit eine Schwingungssignal-Phasendifferenz zwischen dem ersten Schwingungssignal und dem zweiten Schwingungssignal bestimmt und aus der Schwingungssignal-Phasendifferenz einen Massedurchfluss ermittelt. Die Erfindung betrifft ebenfalls ein Coriolis-Massedurchflussmessgerät, das ein solches Verfahren ausführt.

Coriolis-Massedurchflussmessgeräte sind seit Jahrzehnten aus dem Stand der Technik bekannt. Unter Nutzung des Corioliseffekts wird der Massedurchfluss eines Fluids durch das Messrohr bestimmt. Dazu wird das von dem Fluid durchströmte Messrohr, wie eingangs beschrieben, durch wenigstens einen Schwingungserzeuger in Schwingung versetzt. Die Schwingung des Messrohrs wird in Strömungsrichtung gesehen ein- und auslaufseitig durch mit dem Messrohr in Wirkzusammenhang stehende Schwingungsaufnehmer erfasst. Ohne Durchfluss sind die erfassten Schwingungen der beiden Schwingungsaufnehmer im theoretischen Idealfall phasengleich. Bei einem Massedurchfluss ergibt sich ein- und auslaufseitig eine unterschiedlich gerichtete Corioliskraft, die zu einer Phasenverschiebung zwischen den Auslenkungen und damit der beiden erfassten Schwingungen der Schwingungsaufnehmer führt. Deshalb resultiert in diesem Fall auch eine Schwingungssignal-Phasendifferenz zwischen den Schwingungssignalen der Schwingungsaufnehmer. Die Phasenverschiebung ist proportional dem Massedurchfluss innerhalb des Messrohres, sie wird deshalb ausgewertet und aus ihr wird ein Massedurchfluss bestimmt.

Das von dem ersten Schwingungsaufnehmer und dem zweiten Schwingungsaufnehmer bereitgestellte erste Schwingungssignal und zweite Schwingungssignal durchlaufen infolge ihrer Verarbeitung jeweils einen eigenen Messkanal, der üblicherweise analoge und digitale Signalverarbeitungskomponenten aufweist. Die Schwingungssignale werden beispielsweise analog verstärkt, impedanzgewandelt, analog/digital-gewandelt, tiefpassgefiltert, phasendetektiert usw. Aus ganz unterschiedlichen Gründen unterscheiden sich die Laufzeit des ersten Schwingungssignals über den einen Messkanal und die Laufzeit des zweiten Schwingungssignals über den zweiten Messkanal voneinander, beispielsweise aufgrund von Bauteildifferenzen, unterschiedlichen thermischen Abhängigkeiten, abweichenden Alterungsprozessen usw. Das durch die beiden Messkanäle gebildete Messkanalpaar weist folglich eine inhärente Messkanalphasendifferenz auf, die dazu führt, dass nach Durchlaufen des Messkanalpaares die letztlich ermittelte Schwingungssignal-Phasendifferenz fehlerbehaftet ist, also einen Phasenfehler in der Größe der Messkanalphasendifferenz aufweist. Dies führt aufgrund des genannten unmittelbaren Zusammenhangs zwischen Schwingungssignal-Phasendifferenz und Massedurchfluss unweigerlich zu einem Messfehler.

Aus der DE 43 23 028 A1 ist bekannt, nach den Schwingungsaufnehmern eine Umschaltung der Messkanäle vorzunehmen, sodass die von den beiden verschiedenen Schwingungsaufnehmern gelieferten Schwingungssignale abwechselnd mal über den einen und dann über den anderen Messkanal des Messkanalpaares laufen und die parasitäre Messkanalphasendifferenz deshalb mit wechselnden Vorzeichen die Schwingungssignal-Phasendifferenz verfälscht, sodass der Fehler herausgemittelt werden kann. Das Verfahren bringt jedoch Nachteile mit sich, die beispielsweise in Transienten bestehen, die aufgrund des Umschaltens in die Schwingungssignale einstreuen. Ferner werden nachteilige Randbedingungen für den Betrieb nachgelagerter Filter wirksam. Beispielsweise besteht eine Abhängigkeit zwischen der Umschaltfrequenz zwischen den Kanälen des Messkanalpaars und der Auswahl des darauf folgenden Filters und speziell der Filterlänge. Die Wahl der Umschaltfrequenz hat Auswirkungen auf die Messrate, also die Rate mit der Messdaten von dem Coriolis-Massedurchflussmessgerät ausgegeben werden. Dies kann sich zum Beispiel in einer deutlich heruntergesetzten Ausgaberate für ermittelte Messwerte äußern (subsampling) US 2013/141262 A1 sowie US 2008/156108 A1 beschreiben ein Verfahren zum Betreiben eines Coriolis-Massedurchflussmessgeräts mit einem Erreger und Vibrationsdetektoren, die zwei Vibrationssignale mit Phasenverzögerung liefern.

Aufgabe der vorliegenden Erfindung ist es daher, das eingangs genannte Verfahren zum Betrieb eines Coriolis-Massedurchflussmessgeräts und das damit verbundene Coriolis-Massedurchflussmessgerät so auszugestalten und weiterzubilden, dass die genannten Nachteile größtenteils vermieden werden. Die hergeleitete Aufgabe ist bei dem zuvor genannten Verfahren zunächst dadurch gelöst, dass mittels eines ersten Messkanalpaars mit einer ersten Messkanalphasendifferenz aus den Schwingungssignalen durch Kanalumschaltung, analog/digital-Wandlung, Phasendetektion, digitale Tiefpassfilterung mit dadurch bewirktem Downsampling mit einem ersten Konvertierungsfaktor und Mittelwertbildung fehlerfreie Schwingungssignal-Phasendifferenzen ohne enthaltenen Phasenfehler aufgrund herausgemittelter erster Messkanalphasendifferenz berechnet werden. Zu beachten ist hier, dass diese fehlerfreien Schwingungssignal-Phasendifferenzen aus dem ersten Messkanalpaar nicht unmittelbar dazu verwendet werden, einen Massedurchfluss zu berechnen. Im Übrigen weist die Messung über dieses erste Messkanalpaar aufgrund der ähnlichen Realisierung, wie hinsichtlich des Standes der Technik beschrieben, vergleichbare Nachteile auf, wie eben im Stand der Technik.

Ferner werden mittels eines zweiten Messkanalpaars mit einer zweiten Messkanalphasendifferenz aus den Schwingungssignalen durch analog/digitalWandlung, Phasendetektion, digitale Tiefpassfilterung mit dadurch bewirktem Downsampling mit einem zweiten Konvertierungsfaktor und Mittelwertbildung gemittelte fehlerbehaftete Schwingungssignal-Phasendifferenzen mit enthaltenem Phasenfehler in Form der zweiten Messkanalphasendifferenz berechnet. Im Unterschied zur Signalverarbeitung im ersten Messkanalpaar fehlt es im zweiten Messkanalpaar also an einer Kanalumschaltung, weshalb die gewonnenen Schwingungssignal-Phasendifferenzen fehlerbehaftet sind, nämlich in dem Umfang der zweiten Messkanalphasendifferenz.

Darüber hinaus werden mittels eines dritten Messkanalpaars mit vernachlässigbarer Messkanalphasendifferenz die nach der Phasendetektion im zweiten Messkanalpaar gemessenen Schwingungssignal-Phasenlagen des zweiten Messkanalpaars erfasst und es werden entweder durch durchlaufende Tiefpassfilterung ohne Downsampling oder durch Tiefpassfilterung mit Downsampling mit einem dritten Konvertierungsfaktor, wobei der dritte Konvertierungsfaktor kleiner oder größer ist als der erste Konvertierungsfaktor und der zweite Konvertierungsfaktor, fehlerbehaftete Schwingungssignal-Phasendifferenzen mit enthaltenem Phasenfehler aufgrund der zweiten Messkanalphasendifferenz ermittelt. Mit "vernachlässigbarer" Messkanalphasendifferenz ist gemeint, dass der Phasenfehler des dritten Messkanalpaars so klein ist, dass er kein Hindernis zur Erreichung der angestrebten Messgenauigkeit darstellt, denn der Phasenfehler des dritten Messkanalpaars wird im Rahmen der hier vorgestellten Lehre nicht separat behandelt oder kompensiert. Wenn berücksichtigt wird, dass das dritte Messkanalpaar nur einen Bruchteil der Signalverarbeitung des ersten Messkanalpaars und des zweiten Messkanalpaars ausmacht, dann ist es ohne Weiteres plausibel, das dem dritten Messkanalpaar - wenn überhaupt - nur eine extrem kleine Messkanalphasendifferenz inhärent ist. Mit "durchlaufender Tiefpassfilterung" ist gemeint, dass zur Berechnung des aktuellen tiefpassgefilterten Wertes immer eine bestimmte Anzahl an zurückliegenden Werten verwendet wird, und für jeden neu erhaltenen Abtastwert immer auch ein tiefpassgefilterter Wert berechnet wird. Erkennbar ist damit kein Downsampling verbunden. Mit "Tiefpassfilterung mit Downsampling" ist gemeint, dass zur Berechnung eines tiefpassgefilterten Wertes zwar ebenfalls immer eine bestimmte Anzahl an zurückliegenden Abtastwerten verwendet wird, jedoch nicht für jeden neu erhaltenen Abtastwert auch ein tiefpassgefilterter Wert berechnet wird. Dadurch ergibt sich erkennbar ein Downsampling. Bei der reinsten Form dieser Methode werden beispielsweise n zurückliegende Abtastwerte zur Berechnung eines Tiefpassfilterwertes herangezogen, und jede Berechnung eines neuen Tiefpassfilterwertes wird mit n neuen - also zuvor nicht verwendeten - Abtastwerten durchgeführt, sodass sich ein Downsampling um den Faktor n ergibt.

Wichtig ist an dieser Stelle der Umstand, dass der dritte Konvertierungsfaktor kleiner oder größer ist als der erste und der zweite Konvertierungsfaktor. Dadurch ist festgelegt, dass über das dritte Messkanalpaar, das nur eine vernachlässigbare Messkanalphasendifferenz aufweist, mit einer höheren oder niedrigeren Datenrate (fehlerbehaftete) Schwingungssignal-Phasendifferenzen ausgegeben werden, als aus dem ersten und dem zweiten Messkanalpaar im Ergebnis Schwingungssignal-Phasendifferenzen (fehlerbehaftet und nicht fehlerbehaftet) ausgegeben werden.

Durch Differenzbildung aus den gemittelten fehlerbehafteten Schwingungssignal-Phasendifferenzen mit enthaltenem Phasenfehler des zweiten Messkanalpaares und den fehlerfreien Schwingungssignal-Phasendifferenzen ohne enthaltenen Phasenfehler des ersten Messkanalpaares wird die zweite Messkanalphasendifferenz ermittelt, also der mit dem zweiten Messkanalpaar einhergehende Phasenfehler. Im Verhältnis zum dritten Messkanalpaar wird aufgrund der wie oben gewählten Konvertierungsfaktoren dadurch mit geringerer Datenrate die aktuelle Messkanalphasendifferenz des zweiten Messkanalpaares ermittelt. Dies ist jedoch unproblematisch, da die Messkanalphasendifferenz üblicherweise erheblich langsamer veränderlich ist als die interessierenden Durchflussmesswerte veränderlich sein können.

Schließlich wird von den fehlerbehafteten Schwingungssignal-Phasendifferenzen des dritten Messkanalpaares die ermittelte zweite Messkanalphasendifferenz abgezogen und so werden fehlerfreie Schwingungssignal-Phasendifferenzen ohne enthaltenen Phasenfehler erhalten und der Ermittlung des Massedurchflusses zugrunde gelegt.

Die verschiedenen Messkanalpaare mit den verschieden wählbaren Konvertierungsfaktoren ermöglichen also, dass die Datenrate der Messwertausgabe unabhängig realisierbar ist von der Rate, mit der zum Beispiel die zweite Messkanalphasendifferenz ermittelt wird (die ihererseits wieder abhängig ist von der Umschaltfrequenz zwischen den Messkanälen des ersten Messkanalpaares). Damit wird der eingangs beschriebene Nachteil aus dem Stand der Technik überwunden. Wenn der dritte Konvertierungsfaktor kleiner gewählt wird als der erste und der zweite Konvertierungsfaktor, ist es möglich, durch - vergleichsweise langsame - Ermittlung der Messkanalphasendifferenz, also des durch die Eigenschaften des Messkanals verursachten Phasenfehlers, des zweiten Messkanalpaars, und durch - vergleichsweise schnelle - Ermittlung einer fehlerbehafteten Schwingungssignal-Phasendifferenz, die die Messkanalphasendifferenz des zweiten Messkanalpaares umfasst, mittels des dritten Messkanalpaars, ohne Qualitätseinbußen in der Fehlerkorrektur mit hoher Datenrate fehlerfreie Schwingungssignal-Phasendifferenzen und damit Durchflussmesswerte zur Verfügung zu stellen. Wenn der dritte Konvertierungsfaktor größer gewählt wird als der erste und der zweite Konvertierungsfaktor, ist es möglich, unruhige Messsituationen besser zu beherrschen, da über eine größere Filterlänge eine bessere Glättung erzielt wird. Es ist ohne Weiteres möglich, den dritten Konvertierungsfaktor bedarfsweise während des Betriebs des Coriolis-Massedurchflussmessgeräts zu ändern, sodass auf verschiedene Messsituationen im Betrieb reagiert werden kann.

Gemäß einer vorteilhaften Ausgestaltung des Verfahrens ist vorgesehen, dass die Ermittlung der fehlerfreien Schwingungssignal-Phasendifferenzen mittels des ersten Messkanalpaares so realisiert ist, dass die Schwingungssignale mittels des ersten Messkanalpaars mit einem ersten Messkanal und einem zweiten Messkanal und mit einer ersten Messkanalphasendifferenz zwischen dem ersten Messkanal und dem zweiten Messkanal verarbeitet werden, wobei das erste Schwingungssignal und das zweite Schwingungssignal im ersten Messkanalpaar eingangsseitig mit einem ersten Kanalumschalter wechselweise über den ersten Messkanal und den zweiten Messkanal geführt werden. Die Schwingungssignale werden entweder nach dem Kanalumschalter durch wenigstens einen analog/digital-Wandler mit einer ersten Abtastrate abgetastet und die abgetasteten Schwingungssignale mit einem zweiten Kanalumschalter auf ihren ursprünglichen Messkanal geführt oder die Schwingungssignale werden nach dem Kanalumschalter mit einem zweiten Kanalumschalter auf ihren ursprünglichen Messkanal geführt und dann durch wenigstens einen analog/digital-Wandler mit einer ersten Abtastrate abgetastet. Zwischen den Kanalumschaltern können sich natürlich weitere Elemente zur Signalverarbeitung befinden, beispielsweise Signalverstärker. Dann werden mit wenigstens einem Phasendetektor aus den abgetasteten ersten Schwingungssignalen erste gemessene Schwingungssignal-Phasenlagen ermittelt und aus den abgetasteten zweiten Schwingungssignalen zweite gemessene Schwingungssignal-Phasenlagen ermittelt. Aus einer Mehrzahl der in jeweils einer Stellung der Kanalumschalter erhaltenen ersten und zweiten gemessenen Schwingungssignal-Phasenlagen werden durch wenigstens ein digitales Filter mit Tiefpasseigenschaft eine tiefpassgefilterte erste Schwingungssignal-Phasenlage und eine tiefpassgefilterte zweite Schwingungssignal-Phasenlage ermittelt, sodass also ein Downsampling mit dem ersten Konvertierungsfaktor im ersten Messkanalpaar bewirkt wird. Aus zeitlich korrespondierenden tiefpassgefilterten Schwingungssignal-Phasenlagen in jeweils einer Stellung des Kanalumschalters werden entsprechende fehlerbehaftete Schwingungssignal-Phasendifferenzen mit enthaltenem Phasenfehler aufgrund der ersten Messkanalphasendifferenz ermittelt. Durch Mittelwertbildung werden dann aus mehreren fehlerbehafteten Schwingungssignal-Phasendifferenzen mit enthaltenem Phasenfehler fehlerfreie Schwingungssignal-Phasendifferenzen ohne enthaltenen Phasenfehler ermittelt.

Eine weitere bevorzugte Ausgestaltung des Verfahrens ist dadurch gekennzeichnet, dass die Ermittlung der gemittelten fehlerbehafteten Schwingungssignal-Phasendifferenzen mittels des zweiten Messkanalpaares dadurch realisiert ist, dass die Schwingungssignale mittels des zweiten Messkanalpaars mit einem ersten Messkanal und einem zweiten Messkanal und mit einer zweiten Messkanalphasendifferenz zwischen dem ersten Messkanal und dem zweiten Messkanal verarbeitet werden, wobei das erste Schwingungssignal und das zweite Schwingungssignal durch wenigstens einen analog/digitalWandler mit einer ersten Abtastrate abgetastet werden und mit wenigstens einem Phasendetektor aus den abgetasteten ersten Schwingungssignalen erste gemessene Schwingungssignal-Phasenlagen ermittelt werden und aus den abgetasteten zweiten Schwingungssignalen zweite gemessene Schwingungssignal-Phasenlagen ermittelt werden. Aus einer Mehrzahl der während einer Stellung der Kanalumschalter des ersten Messkanalpaars im zweiten Messkanalpaar erhaltenen ersten und zweiten gemessenen Schwingungssignal-Phasenlagen werden durch wenigstens ein digitales Filter mit Tiefpasseigenschaft eine tiefpassgefilterte erste Schwingungssignal-Phasenlage und eine tiefpassgefilterte zweite Schwingungssignal-Phasenlage ermittelt, sodass also ein Downsampling mit dem zweiten Konvertierungsfaktor im zweiten Messkanal bewirkt wird. Aus zeitlich korrespondierenden tiefpassgefilterten Schwingungssignal-Phasenlagen werden entsprechende fehlerbehaftete Schwingungssignal-Phasendifferenzen mit enthaltenem Phasenfehler aufgrund der zweiten Messkanalphasendifferenz ermittelt, denn es fehlt im zweiten Messkanalpaar ja an einer Kanalumschaltung wie im ersten Messkanalpaar. Durch Mittelwertbildung aus mehreren fehlerbehafteten Schwingungssignal-Phasendifferenzen mit enthaltenem Phasenfehler werden gemittelte fehlerbehaftete Schwingungssignal-Phasendifferenzen mit enthaltenem Phasenfehler aufgrund der zweiten Messkanalphasendifferenz berechnet.

Nach einer weiteren Weiterentwicklung des Verfahrens ist vorgesehen, dass die Ermittlung der fehlerbehafteten Schwingungssignal-Phasendifferenzen mittels des dritten Messkanalpaares so realisiert ist, dass mittels des dritten Messkanalpaars mit vernachlässigbarer Messkanalphasendifferenz aus den ersten gemessenen Schwingungssignal-Phasenlagen des ersten Messkanalpaars und aus den zweiten gemessenen Schwingungssignal-Phasenlagen des zweiten Messkanalpaars entweder mittels eines durchlaufenden digitalen Filters mit Tiefpasseigenschaft tiefpassgefilterte erste Schwingungssignal-Phasenlagen und tiefpassgefilterte zweite Schwingungssignal-Phasenlagen ermittelt werden, ohne dass ein Downsampling im dritten Messkanalpaar bewirkt wird, oder dass durch Tiefpassfilterung mit Downsampling mit einem dritten Konvertierungsfaktor, wobei der dritte Konvertierungsfaktor kleiner oder größer ist als der erste Konvertierungsfaktor und der zweite Konvertierungsfaktor, tiefpassgefilterte erste Schwingungssignal-Phasenlagen und tiefpassgefilterte zweite Schwingungssignal-Phasenlagen ermittelt werden, und aus zeitlich korrespondierenden tiefpassgefilterten Schwingungssignal-Phasenlagen entsprechende fehlerbehaftete Schwingungssignal-Phasendifferenzen mit enthaltenem Phasenfehler aufgrund der zweiten Messkanalphasendifferenz ermittelt werden.

Bei eine weiteren bevorzugte Ausgestaltung des Verfahrens sind der erste Konvertierungsfaktor und der zweite Konvertierungsfaktor in einem ganzzahligen Verhältnis zueinander gewählt, bevorzugt sind sie identisch gewählt, was insbesondere dem Einsatz gleicher schaltungstechnischer Komponenten zugute kommt.

Eine weitere vorteilhafte Ausgestaltung des Verfahrens zeichnet sich dadurch aus, dass die Umschaltfrequenz des Kanalumschalters des ersten Messkanalpaares und die Anregungsfrequenz des Schwingungserzeugers so aufeinander abgestimmt sind, dass während der Dauer einer Stellung des Kanalumschalters wenigstens eine Messrohrschwingung erfasst wird, vorzugsweise eine Mehrzahl an Messrohrschwingungen erfasst wird, besonders bevorzugt zwischen 4 und 12 Messrohrschwingungen erfasst werden. Diese Ausgestaltung hat den Vorteil, dass mögliche Phasenabweichungen während einer Messrohrschwingung, insbesondere bei gleichbleibendem Durchfluss, ausgeglichen werden können.

Eine weitere vorteilhafte Fortbildung des Verfahrens sieht vor, dass die Umschaltfrequenz des Kanalumschalters des ersten Messkanalpaares, die Abtastrate des analog/digital-Wandlers des ersten Messkanalpaares und/oder des zweiten Messkanalpaares und die Länge der digitalen Filter mit Tiefpasseigenschaften des ersten Messkanalpaares und/oder des zweiten Messkanalpaares so aufeinander abgestimmt sind, dass das digitale Filter mit Abtastwerten einer Stellung des Kanalumschalters im Wesentlichen vollständig befüllt wird. Hier stellt sich der vorteilhafte Effekt ein, dass der Einfluss von durch die Umschaltung bewirkter Transienten reduziert wird. Bei einem bevorzugten Ausführungsbeispiel ist werden darüber hinaus die Abtastwerte der analog/digital-Wandler des ersten Messkanalpaares und/oder des zweiten Messkanalpaares im Bereich der Umschaltzeitpunkte des Kanalumschalters nicht verwendet in den digitalen Filtern mit Tiefpasseigenschaften des ersten Messkanalpaares und/oder des zweiten Messkanalpaares, wodurch der Einfluss von Übergangsvorgängen in den Umschaltzeitpunkten weiter verdrängt wird. Bei einer konkreten Fortbildung des Verfahrens werden die Abtastwerte der analog/digital-Wandler des ersten Messkanalpaares und/oder des zweiten Messkanalpaares im Bereich der Umschaltzeitpunkte des Kanalumschalters in den digitalen Filtern mit Tiefpasseigenschaften des ersten Messkanalpaares und/oder des zweiten Messkanalpaares durch Nullen ersetzt, wodurch Übergangseffekte in Umschaltzeitpunkten praktisch überschrieben werden.

Bei einer weiteren vorteilhaften Ausgestaltung des Verfahrens ist den digitalen Filtern mit Tiefpasseigenschaft im dritten Messkanalpaar ein weiteres digitales Filter zu Realisierung eines Downsampling nachgeschaltet, insbesondere wobei das Downsampling so gewählt ist, dass die nachfolgende Berechnung der fehlerbehafteten Schwingungssignal-Phasendifferenzen und der fehlerfreien Schwingungssignal-Phasendifferenzen mit jedem nach dem Downsampling bereitgestellten Wertepaar von tiefpassgefilterten Schwingungssignal-Phasenlagen erfolgen kann. In diesem Fall sind die Berechnungsressourcen bestmöglich genutzt. Es werden möglichst viele Daten zur Tiefpassfilterung herangezogen, was das Glättungsergebnis optimiert. Es werden aber nur so viele Daten tiefpassgefiltert, dass die dadurch bewirkte Reduzierung der Datenrate am Ausgang des Tiefpassfilters nur so groß ist, dass nachfolgende Berechnungskapazitäten, beispielsweise für Fließkommaoperationen, gerade dazu ausreichen, die Informationen mit der bereitgestellten Datenrate auch zu nutzen und mit einer korrespondierenden Datenrate auch weitere Ausgangswerte zu erzeugen.

Bevorzugt ist realisiert, dass das digitale Filter des ersten Messkanalpaares mit Tiefpasseigenschaft und/oder das digitale Filter des zweiten Messkanalpaares mit Tiefpasseigenschaft und/oder das digitale Filter des dritten Messkanalpaares mit Tiefpasseigenschaft als FIR-Filter (finite impulse response filter) realisiert sind.

Ferner betrifft die Erfindung auch ein Coriolis-Massedurchflussmessgerät mit wenigstens einem Messrohr, wenigstens einem Schwingungserzeuger, wenigstens zwei Schwingungsaufnehmern und wenigstens einer Steuer- und Auswerteeinheit, wobei das Messrohr von einem Medium durchströmbar ist, wobei der Schwingungserzeuger das Messrohr in eine harmonische Schwingung mit einer Anregungsfrequenz anregt, wobei der erste und der zweite Schwingungsaufnehmer die Schwingungen des Messrohrs einlaufseitig und auslaufseitig erfassen und als erstes Schwingungssignal mit einer ersten Schwingungssignal-Phasenlage und als zweites Schwingungssignal mit einer zweiten Schwingungssignal-Phasenlage bereitstellen, wobei die Steuer- und Auswerteeinheit eine Schwingungssignal-Phasendifferenz zwischen dem ersten Schwingungssignal und dem zweiten Schwingungssignal bestimmt und aus der Schwingungssignal-Phasendifferenz einen Massedurchfluss ermittelt. Das erfindungsgemäße Coriolis-Massedurchflussmessgerät löst die eingangs hergeleitete Aufgabe korrespondierend zu dem vorgestellten Verfahren dadurch, dass die Steuer- und Auswerteeinheit so ausgebildet ist, dass mittels eines ersten Messkanalpaars mit einer ersten Messkanalphasendifferenz aus den Schwingungssignalen durch Kanalumschaltung, analog/digital-Wandlung, Phasendetektion, digitale Tiefpassfilterung mit dadurch bewirktem Downsampling mit einem ersten Konvertierungsfaktor und Mittelwertbildung fehlerfreie Schwingungssignal-Phasendifferenzen ohne enthaltenen Phasenfehler aufgrund herausgemittelter erster Messkanalphasendifferenz berechnet werden, dass mittels eines zweiten Messkanalpaars mit einer zweiten Messkanalphasendifferenz aus den Schwingungssignalen durch Digital-Analog-Wandlung, Phasendetektion, digitale Tiefpassfilterung mit dadurch bewirktem Downsampling mit einem zweiten Konvertierungsfaktor und Mittelwertbildung gemittelte fehlerbehaftete Schwingungssignal-Phasendifferenzen mit enthaltenem Phasenfehler in Form der zweiten Messkanalphasendifferenz berechnet werden, dass mittels eines dritten Messkanalpaars mit vernachlässigbarer Messkanalphasendifferenz die nach der Phasendetektion im zweiten Messkanalpaar gemessenen Schwingungssignal-Phasenlagen des zweiten Messkanalpaars erfasst werden und entweder durch durchlaufende Tiefpassfilterung ohne Downsampling oder durch Tiefpassfilterung mit Downsampling mit einem dritten Konvertierungsfaktor, wobei der dritte Konvertierungsfaktor kleiner oder größer ist als der erste Konvertierungsfaktor und der zweite Konvertierungsfaktor, fehlerbehaftete Schwingungssignal-Phasendifferenzen mit enthaltenem Phasenfehler aufgrund der zweiten Messkanalphasendifferenz ermittelt werden, dass durch Differenzbildung aus den gemittelten fehlerbehafteten Schwingungssignal-Phasendifferenzen mit enthaltenem Phasenfehler des zweiten Messkanalpaares und den fehlerfreien Schwingungssignal-Phasendifferenzen ohne enthaltenen Phasenfehler des ersten Messkanalpaares die zweite Messkanalphasendifferenz ermittelt wird und dass von den fehlerbehafteten Schwingungssignal-Phasendifferenzen des dritten Messkanalpaares die ermittelte zweite Messkanalphasendifferenz abgezogen wird und so fehlerfreie Schwingungssignal-Phasendifferenzen ohne enthaltenen Phasenfehler erhalten und der Ermittlung des Massedurchflusses zugrunde gelegt werden.

Selbstverständlich ist das vorgenannte Coriolis-Massedurchflussmessgerät ferner so ausgestaltet, dass es mit seiner Steuer- und Auswerteeinheit im Betrieb des Coriolis-Massedurchflussmessgeräts das vorbeschriebene Verfahren in einer oder mehrerer seiner Varianten ausführen kann. Hier wird zur Steuer- und Auswerteeinheit die gesamte relevante Signalverarbeitung gezählt ggf. außer den separat genannten Komponenten.

Im Einzelnen gibt es nun verschiedene Möglichkeiten, das erfindungsgemä-ße Verfahren zum Betrieb eines Coriolis-Massedurchflussmessgerät und das entsprechende Coriolis-Massedurchflussmessgerät auszugestalten und weiterzubilden. Dazu wird verwiesen auf die den unabhängigen Patentansprüchen nachgeordneten Patentansprüche und auf die Beschreibung bevorzugter Ausführungsbeispiele in Verbindung mit der Zeichnung. In der Zeichnung zeigen:
- Fig. 1: schematisch die grundlegende Problematik bei der Verarbeitung von Schwingungssignalen von Coriolis-Massedurchflussmessgeräten bei Vorliegen einer Messkanalphasendifferenz,
- Fig. 2: schematisch ein aus dem Stand der Technik bekanntes Verfahren und Coriolis-Massedurchflussmessgerät zur Vermeidung des Einflusses von Messkanalphasendifferenzen und
- Fig. 3: schematisch ein erfindungsgemäßes Verfahren und Coriolis-Massedurchflussmessgerät zur Vermeidung des Einflusses von Messkanalphasendifferenzen.

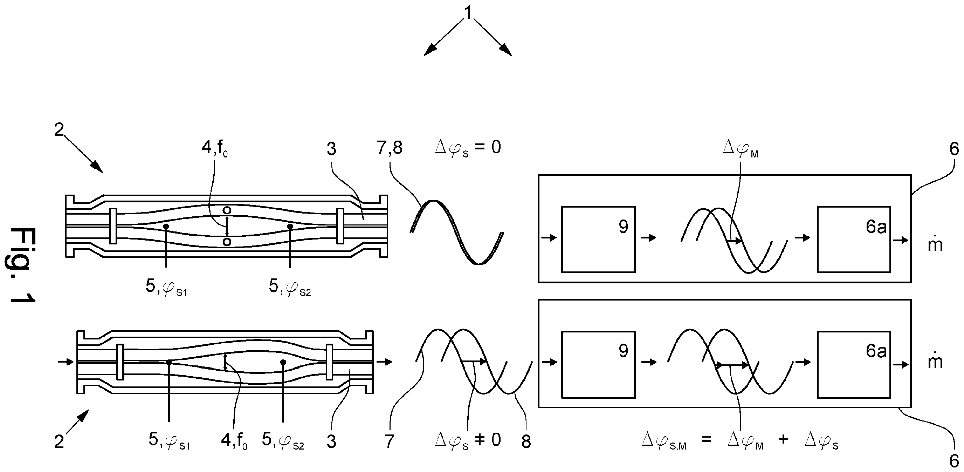

In den Fig. 1 bis 3 ist jeweils schematisch ein Verfahren 1 zum Betrieb eines Coriolis-Massedurchflussmessgerät 2 dargestellt und, zumindest teilweise mit relevanten Komponenten, auch ein entsprechendes Coriolis-Massedurchflussmessgerät 2, das verfahrensgemäß betrieben wird. Alles, was nachfolgend zu dem Verfahren 1 ausgeführt wird, ist gleichermaßen zu beziehen auf das entsprechende Coriolis-Massedurchflussmessgerät 1, das Verfahrensgemäß betrieben wird, und umgekehrt.

Auf der linken Seite von Fig. 1 ist schematisch dargestellt der mechanische Aufbau eines Coriolis-Massedurchflussmessgeräts 2 mit zwei Messrohren 3, einem angedeuteten Schwingungserzeuger 4, zwei angedeuteten Schwingungsaufnehmern 5 und mit eine Steuer- und Auswerteeinheit 6, die allerdings auf der rechten Seite von Fig. 1 dargestellt ist.

Die Messrohre 3 werden im Messbetrieb von einem Medium durchströmt, wobei der Schwingungserzeuger 4 die Messrohre in entgegengesetzte Richtungen senkrecht zur Durchströmungsrichtung und damit zur Erstreckungsrichtung der Messrohre 3 zwecks Erhaltung des Massemittelpunktes zu einer Schwingung mit einer Anregungsfrequenz f₀ anregt. Der erste und der zweite Schwingungsaufnehmer 5 erfassen die Schwingungen des Messrohrs 3 einlaufseitig und auslaufseitig und stellen sie als erstes Schwingungssignal 7 mit einer ersten Schwingungssignal-Phasenlage ϕ_{S1} und als zweites Schwingungssignal 8 mit einer zweiten Schwingungssignal-Phasenlage ϕ_{S2} bereit. Die Steuer- und Auswerteeinheit 6 bestimmt idealerweise fehlerfrei die Schwingungssignal-Phasendifferenz Δϕ_{S} zwischen dem ersten Schwingungssignal 7 und dem zweiten Schwingungssignal 8 und ermittelt aus der Schwingungssignal-Phasendifferenz Δϕ_{S} einen Massedurchfluss.

Bei idealer mechanischer Auslegung des Coriolis-Massedurchflussmessgeräts 2 ist die Schwingungssignal-Phasendifferenz Δϕ_{S} bei undurchströmten Messrohren 3 gleich Null (Δϕ_{S} = 0) und bei durchströmten Messrohren ungleich Null (Δϕ_{S} ungleich 0) und proportional dem Massestrom des Mediums. Der erste Fall ist oben in Fig. 1 dargestellt, der letztere Fall unten in Fig. 1. Wie im allgemeinen Beschreibungsteil bereits ausgeführt, hat die Signalverarbeitung in der Steuer- und Auswerteeinheit 6 des ersten und zweiten Schwingungssignals 7, 8 einen unbeabsichtigten, parasitären Einfluss auf die Phasenlage des ersten und zweiten Schwingungssignals 7, 8 zueinander. Die Schwingungssignale 7 und 8 werden im dargestellten Ausführungsbeispiel über ein analoges Messkanalpaar 9 einem hier digital realisierten Signalverarbeitungsbereich 6a der Steuer- und Auswerteeinheit 6 zugeführt. Auf dem Weg dahin werden die Schwingungssignale 7, 8 mit einer parasitären Messkanalphasendifferenz Δϕ_{M} versehen. Die resultierende Schwingungssignal-Phasendifferenz Δϕ_{S,M} ist demzufolge verschieden und verfälscht von der fehlerfreien Schwingungssignal-Phasendifferenz Δϕ_{S}. Dies resultiert zwangsläufig in einem Messfehler beim Massedurchfluss (m Punkt). Durch Kalibrierung kann diesem Messfehler nicht dauerhaft begegnet werden, da die Messkanalphasendifferenz beispielsweise zeit- und temperaturabhängig sein kann.

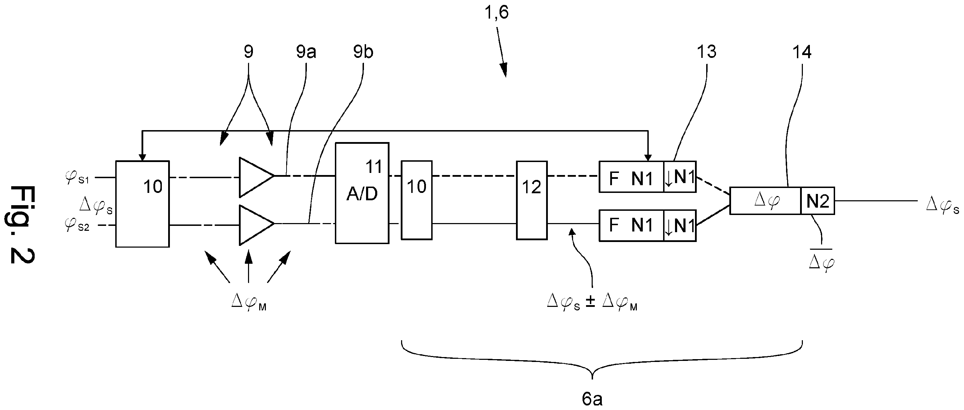

In Fig. 2 ist ein bekanntes Verfahren dargestellt, wie dem dem Messkanalpaar 9 mit seinem ersten Messkanal 9a und seinem zweiten Messkanal 9b inhärenten Phasenfehler in Form der Messkanalphasendifferenz Δϕ_{M} begegnet werden kann. Die Lösung sieht hier vor, dass mittels eines Messkanalpaars 9 mit der Messkanalphasendifferenz Δϕ_{M} aus den Schwingungssignalen 7, 8 durch Kanalumschaltung 10, analog/digital-Wandlung 11, Phasendetektion 12, digitale Tiefpassfilterung 13 mit dadurch bewirktem Downsampling mit einem Konvertierungsfaktor N1 und Mittelwertbildung 14 fehlerfreie Schwingungssignal-Phasendifferenzen Δϕ_{S} ohne enthaltenen Phasenfehler aufgrund herausgemittelter Messkanalphasendifferenz Δϕ_{M} berechnet werden. Die Idee liegt hier im Wesentlichen in der Kanalumschaltung, wodurch das erste Schwingungssignal 7 und das zweite Schwingungssignal 8 abwechselnd mal über den ersten Messkanal 9a und dann über den zweiten Messkanal 9b des Messkanalpaars 9 geführt werden, wodurch die Messkanalphasendifferenz Δϕ_{M} mit wechselndem Vorzeichen auf die Schwingungssignal-Phasendifferenz einwirkt und so schlussendlich herausgemittelt werden kann. Die Vorgehensweise führt zu Störungen in den Umschaltzeitpunkten des Kanaumschalters und die Gegenmaßnahmen - mit dem Umschalten synchrones Filtern, Glätten, Mittelwertbildung - führen zu einer Herabsetzung der Messdatenrate am Ausgang der Steuer- und Auswerteeinheit 6 und damit des Coriolis-Massedurchflussmessgeräts 2. Ferner hat die Frequenz der Kanalumschaltung 10 und damit die Anzahl der erfassten Messwerte bei gegebener Abtastrate der analog/digital-Wandlung 11 unmittelbaren Einfluss auf die Ausgestaltung der digitalen Tiefpassfilterung 13, insbesondere auf die Länge der Tiefpassfilter 13 und damit auch auf die Rate, mit der Messdaten, also Durchflussmesswerte, ausgegeben werden können. Diese generelle Abhängigkeit ist einschränkend für die Auslegung und den Einsatz des Verfahrens 1 und des Coriolis-Massedurchflussmessgeräts 2.

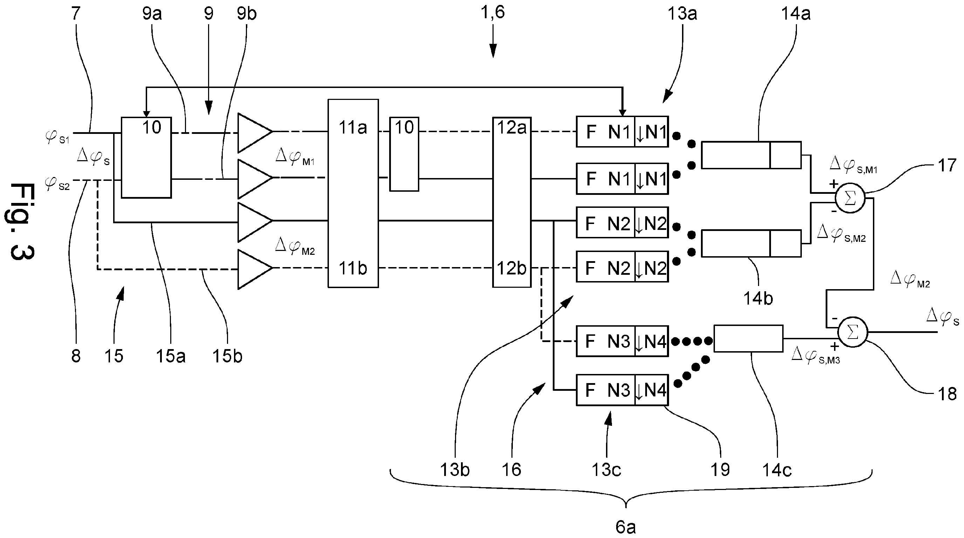

Mit dem in Fig. 3 dargestellten Verfahren 1 und verfahrensgemäß betriebenen Coriolis-Massedurchflussmessgerät 2 lassen sich diese Nachteile, trotz Kompensierung der Messkanalphasendifferenz durch Kanalumschaltung, vermeiden, insbesondere lassen sich höhere Messdatenraten erzielen ohne Verstoß gegen Randbedingungen (speziell Nyquist) des Abtastsystems.

Das in der Fig. 3 dargestellte Verfahren 1 wird durch eine schematisch dargestellte elektronische Schaltung beschrieben, die Bestandteil eines Coriolis-Massedurchflussmessgeräts 2 ist, und die naturgemäß einen inhärenten Signalfluss aufweist, hier in Form mehrerer Messkanäle 9, 15, 16. In Fig. 3 werden verschiedene Bezeichner nach Art von Formelzeichen verwendet, die das Nachvollziehen der vorliegenden Beschreibung erleichtern. In Strenge müsste nach jedem Schritt der Signalverarbeitung ein anderer Bezeichner verwendet werden, da beispielsweise ein verstärktes Schwingungssignal nach einem Verstärker natürlich nicht identisch ist mit dem unverstärkten Schwingungssignal vor dem entsprechenden Verstärker. Aus Zwecken der Übersichtlichkeit ist dies hier nicht in Strenge umgesetzt worden; es ist für das Verständnis auch nicht erforderlich. Entsprechend ist Fig. 3 zu lesen und zu verstehen. Die Bezeichner sind für das eindeutige Verständnis der Patentansprüche nicht erforderlich, sie erleichtern aber das Verständnis, insoweit sind die Bezeichner in den Patentansprüchen wie Bezugszeichen in Klammern gesetzt worden.

Das Verfahren 1 und damit das verfahrensgemäß arbeitende Coriolis-Massedurchflussmessgerät 2 zeichnen sich zunächst dadurch aus, dass mittels eines ersten Messkanalpaars 9 mit einer ersten Messkanalphasendifferenz Δϕ_{M1} aus den Schwingungssignalen 7, 8 durch Kanalumschaltung 10, analog/digital-Wandlung 11a, Phasendetektion 12a, digitale Tiefpassfilterung 13a mit dadurch bewirktem Downsampling mit einem ersten Konvertierungsfaktor N1 und Mittelwertbildung 14a fehlerfreie Schwingungssignal-Phasendifferenzen Δϕ_{S,M1} ohne enthaltenen Phasenfehler aufgrund herausgemittelter erster Messkanalphasendifferenz Δϕ_{M1} berechnet werden. Die Realisierung des ersten Messkanals 9 ist also bekannt. Die Schwingungssignal-Phasendifferenz Δϕ_{S} zwischen dem ersten Schwingungssignal 7 mit der ersten Schwingungssignal-Phasenlage ϕ_{S1} und dem zweiten Schwingungssignal 8 mit der zweiten Schwingungssignal-Phasenlage ϕ_{S2} unterscheiden sich also durch die unverfälschte und tatsächlich interessierende Schwingungssignal-Phasendifferenz Δϕ_{S}. Wie im Stand der Technik wird die Schwingungssignal-Phasendifferenz Δϕ_{S} bei Durchlaufen insbesondere des analogen Teils des ersten Messkanalpaars 9 (linke Seite von Fig. 3) durch die Messkanalphasendifferenz Δϕ_{M1} verfälscht. Der auf den analog/digital-Wandler 11 bzw. 11a folgende Schaltungsteil ist digital realisiert, also beispielsweise durch einen programmierten digitalen Signalprozessor. Es liegen demzufolge Abtastwerte mit einem definierten Zeitstempel vor, sodass weiteres zeitliches Auseinanderdriften zwischen den digitalen Werten prinzipbedingt nicht mehr möglich ist; aus diesem Grund ist die Messkanalphasendifferenz im Bereich des analogen Schaltungsteils vermerkt worden. Das durch die digitale Tiefpassfilterung bewirkte Downsampling führt dazu, dass die Datenrate, mit der die - fehlerfreie - Schwingungssignal-Phasendifferenz Δϕ_{S,M1} am Ausgang des ersten Messkanalpaares bereitgestellt werden kann, unter Umständen erheblich geringer ist als die Datenrate, die der Abtastfrequenz des analog/digitalWandlers 11a im ersten Messkanalpaar 9 entspricht.

Der Vollständigkeit halber sei erwähnt, dass die Phasendetektion 12 bzw 12a hier durch I/Q-Demodulation realisiert ist, was sich aufgrund des harmonischen Charakters der Schwingungssignale und der bekannten Frequenz der Schwingungssignale anbietet.

Mittels eines zweiten Messkanalpaars 15 mit einer zweiten Messkanalphasendifferenz Δϕ_{M2} werden aus den Schwingungssignalen 7, 8 durch analog/digital-Wandlung 11b, Phasendetektion 12b, digitale Tiefpassfilterung 13b mit dadurch bewirktem Downsampling mit einem zweiten Konvertierungsfaktor N2 und Mittelwertbildung 14b gemittelte fehlerbehaftete Schwingungssignal-Phasendifferenzen Δϕ_{S,M2} mit enthaltenem Phasenfehler in Form der zweiten Messkanalphasendifferenz Δϕ_{M2} berechnet. Der Fehler besteht hier in der Messkanalphasendifferenz Δϕ_{M2} des zweiten Messkanalpaars 15, denn es sind ja keine Maßnahmen - wie Kanalumschaltung 10 im ersten Messkanalpaar 9 - vorgenommen worden, um die Messkanalphasendifferenz Δϕ_{M2} zu eliminieren.

Mittels eines dritten Messkanalpaars 16 mit vernachlässigbarer Messkanalphasendifferenz werden die nach der Phasendetektion 12b im zweiten Messkanalpaar 15 gemessenen Schwingungssignal-Phasenlagen des zweiten Messkanalpaars 15 erfasst und entweder durch durchlaufende Tiefpassfilterung 13c ohne Downsampling oder durch Tiefpassfilterung 13c mit Downsampling mit einem dritten Konvertierungsfaktor N3 tiefpassgefiltert, wobei der dritte Konvertierungsfaktor kleiner oder größer ist als der erste Konvertierungsfaktor N1 und der zweite Konvertierungsfaktor N2, und dann werden fehlerbehaftete Schwingungssignal-Phasendifferenzen Δϕ_{S,M3} mit enthaltenem Phasenfehler aufgrund der zweiten Messkanalphasendifferenz Δϕ_{M2} ermittelt. Wichtig ist hier tatsächlich, dass durch die angegebene Wahl des dritten Konvertierungsfaktors N3 im Verhältnis zu den beiden anderen Konvertierungsfaktoren N1 und N2 erreicht wird, dass das dritte Messkanalpaar 16 im Fall eines kleiner gewählten dritten Konvertierungsfaktors N3 an seinem Ausgang mit einer größeren Datenrate fehlerbehaftete Schwingungssignal-Phasendifferenzen Δϕ_{S,M3} ausgeben kann und auch ausgibt, als an den Ausgängen des ersten Messkanalpaars 9 und des zweiten Messkanalpaars 15 Daten ausgegeben werden. Wird der dritte Konvertierungsfaktor N3 größer gewählt als der erste Konvertierungsfaktor N1 und der zweite Konvertierungsfaktor N2, können unruhige Messgrößen besser geglättet werden bei Inkaufnahme einer längeren Ansprechzeit und einer geringeren Rate, mit der Messdaten ausgegeben werden. Der dritte Konvertierungsfaktor N3 kann auch während des Messbetriebs umgeschaltet werden. Insbesondere kann der dritte Konvertierungsfaktor N3 unabhängig gewählt werden. Die Messkanalphasendifferenz ist im gezeigten Ausführungsbeispiel praktisch Null, da das dritte Messkanalpaar ausschließlich im digitalen Bereich 6a der Steuer- und Auswerteschaltung 6 realisiert ist.

Durch Differenzbildung 17 aus den gemittelten fehlerbehafteten Schwingungssignal-Phasendifferenzen Δϕ_{S,M2} mit enthaltenem Phasenfehler des zweiten Messkanalpaares 15 und den fehlerfreien Schwingungssignal-Phasendifferenzen Δϕ_{S,M1} ohne enthaltenen Phasenfehler des ersten Messkanalpaares 9 wird die zweite Messkanalphasendifferenz Δϕ_{M2} ermittelt. Da der dritte Konvertierungsfaktor N3 im dargestellten Ausführungsbeispiel kleiner gewählt ist als der erste Konvertierungsfaktor N1 und der zweite Konvertierungsfaktor N2, geschieht dies im Verhältnis zu der Ausgangsdatenrate des dritten Messkanalpaars 16 ebenfalls - im Vergleich - langsam, worauf es jedoch nicht ankommt, da sich die parasitären Messkanalphasendifferenzen nur relativ langsam gegenüber möglichen Durchflussänderungen verändern.

Schließlich wird von den fehlerbehafteten Schwingungssignal-Phasendifferenzen Δϕ_{S,M3} des dritten Messkanalpaares 16 die ermittelte zweite Messkanalphasendifferenz Δϕ_{M2} abgezogen 18 und so werden fehlerfreie Schwingungssignal-Phasendifferenzen Δϕ_{S} ohne enthaltenen Phasenfehler erhalten und der Ermittlung des Massedurchflusses zugrunde gelegt.

Im Ergebnis wird mit einer relativ geringen Datenrate die zweite Messkanalphasendifferenz Δϕ_{M2} des zweiten Messkanalpaares 15 ermittelt, mit einer relativ schnellen Datenrate werden fehlerbehaftete Schwingungssignal-Phasendifferenzen des zweiten Messkanalpaares 15 mithilfe des dritten Messkanalpaars 16 ermittelt (Δϕ_{S,M3} = Δϕ_{S} + Δϕ_{M2}). Durch Subtraktion 18 dieser Größen werden mit einer relativ hohen Datenrate fehlerkorrigierte Schwingungssignal-Phasendifferenzen Δϕ_{S} ausgegeben, die der Massedurchflussberechnung zugrunde gelegt werden, die dann ebenfalls mit einer relativ hohen Datenrate erfolgen kann. In den Fig. 2 und 3 sind für die eingangsseitige Schwingungssignal-Phasendifferenz am Eingang der Signalverarbeitungsstrecke und für die fehlerkorrigierte Schwingungssignal-Phasendifferenz am Ausgang der Signalverarbeitungsstrecke die gleichen Formelzeichen verwendet worden, nämlich Δϕ_{S}, um kenntlich zu machen, dass durch das Verfahren 1 im Rahmen der hier nur betrachteten Fehlerquellen das unverfälschte Eingangssignal ausgangsseitig wieder erhalten wird.

Die Ausgestaltungen der verschiedenen Messkanalpaare 9, 15, 16 und damit der verbundenen Ausgestaltungen des Verfahrens 1 werden im Folgenden etwas genauer beschrieben.

Die Ermittlung der fehlerfreien Schwingungssignal-Phasendifferenzen Δϕ_{M1} mittels des ersten Messkanalpaares 9 ist so realisiert, dass die Schwingungssignale 7, 8 mittels des ersten Messkanalpaars 9 mit einem ersten Messkanal 9a und einem zweiten Messkanal 9b und mit einer ersten Messkanalphasendifferenz Δϕ_{M1} zwischen dem ersten Messkanal 9a und dem zweiten Messkanal 9b verarbeitet werden, wobei das erste Schwingungssignal 7 und das zweite Schwingungssignal 8 im ersten Messkanalpaar 9 eingangsseitig mit einem ersten Kanalumschalter 10 (Multiplexer) wechselweise über den ersten Messkanal 9a und den zweiten Messkanal 9b geführt werden, die Schwingungssignale 7, 8 entweder nach dem ersten Kanalumschalter 10 durch wenigstens einen analog/digital-Wandler 11a mit einer ersten Abtastrate abgetastet werden und die abgetasteten Schwingungssignale mit einem zweiten Kanalumschalter 10 (Demultiplexer) auf ihren ursprünglichen Messkanal 9a, 9b geführt werden oder die Schwingungssignale werden nach dem ersten Kanalumschalter 10 (Multiplexer) mit einem zweiten Kanalumschalter 10 (Demultiplexer) auf ihren ursprünglichen Messkanal 9a, 9b geführt und dann durch einen analog/digital-Wandler 11a mit einer ersten Abtastrate abgetastet. Die Kanalumschaltung 10 umfasst hier also zwei Teile, nämlich in Signallaufrichtung gesehen einen Multiplexer und einen Demultiplexer, wobei im konkreten Ausführungsbeispiel der Multiplexer tatsächlich physikalisch eine Umschaltung der Signale zwischen den beiden Messkanälen vornimmt. Die Funktion des Demultiplexers ist hier softwaremäßig gelöst, indem abwechselnd auf verschiedene Speicherzellen zugegriffen wird, in denen die Daten aus den beiden Messkanälen nach der analog/digital-Wandlung abgelegt worden sind.

Mit einem Phasendetektor 12a werden aus den abgetasteten ersten Schwingungssignalen erste gemessene Schwingungssignal-Phasenlagen ermittelt und aus den abgetasteten zweiten Schwingungssignalen werden zweite gemessene Schwingungssignal-Phasenlagen ermittelt. Aus einer Mehrzahl der in jeweils einer Stellung der Kanalumschalter 10 erhaltenen ersten und zweiten gemessenen Schwingungssignal-Phasenlagen werden durch ein digitales Filter 13a mit Tiefpasseigenschaft eine tiefpassgefilterte erste Schwingungssignal-Phasenlage und eine tiefpassgefilterte zweite Schwingungssignal-Phasenlage ermittelt, sodass also ein Downsampling mit dem ersten Konvertierungsfaktor N1 im ersten Messkanalpaar 9 bewirkt wird. Aus zeitlich korrespondierenden tiefpassgefilterten Schwingungssignal-Phasenlagen werden in jeweils einer Stellung des Kanalumschalters 10 entsprechende fehlerbehaftete Schwingungssignal-Phasendifferenzen mit enthaltenem Phasenfehler aufgrund der ersten Messkanalphasendifferenz Δϕ_{M1} ermittelt. Durch Mittelwertbildung werden aus mehreren fehlerbehafteten Schwingungssignal-Phasendifferenzen mit enthaltenem Phasenfehler fehlerfreie Schwingungssignal-Phasendifferenzen Δϕ_{SM,1} ohne enthaltenen Phasenfehler berechnet.

Ferner ist in Fig. 3 zu erkennen, dass die Ermittlung der gemittelten fehlerbehafteten Schwingungssignal-Phasendifferenzen Δϕ_{S,M2} mittels des zweiten Messkanalpaares 15 dadurch realisiert ist, dass die Schwingungssignale 7, 8 mittels des zweiten Messkanalpaars 15 mit einem ersten Messkanal 15a und einem zweiten Messkanal 15b und mit einer zweiten Messkanalphasendifferenz Δϕ_{M2} zwischen dem ersten Messkanal 15a und dem zweiten Messkanal 15b verarbeitet werden, wobei das erste Schwingungssignal 7 und das zweite Schwingungssignal 8 durch einen analog/digital-Wandler 11b mit einer ersten Abtastrate abgetastet werden und mit einem Phasendetektor 12b aus den abgetasteten ersten Schwingungssignalen erste gemessene Schwingungssignal-Phasenlagen ermittelt werden. Aus den abgetasteten zweiten Schwingungssignalen werden zweite gemessene Schwingungssignal-Phasenlagen ermittelt. Aus einer Mehrzahl der während einer Stellung der Kanalumschalter 10 des ersten Messkanalpaars 9 im zweiten Messkanalpaar 15 erhaltenen ersten und zweiten gemessenen Schwingungssignal-Phasenlagen werden durch ein digitales Filter 13b mit Tiefpasseigenschaft eine tiefpassgefilterte erste Schwingungssignal-Phasenlage und eine tiefpassgefilterte zweite Schwingungssignal-Phasenlage ermittelt, sodass also ein Downsampling mit dem zweiten Konvertierungsfaktor N2 im zweiten Messkanalpaar 9 bewirkt wird. Aus zeitlich korrespondierenden tiefpassgefilterten Schwingungssignal-Phasenlagen werden entsprechende fehlerbehaftete Schwingungssignal-Phasendifferenzen mit enthaltenem Phasenfehler aufgrund der zweiten Messkanalphasendifferenz Δϕ_{M2} ermittelt. Durch Mittelwertbildung 14b werden aus mehreren fehlerbehafteten Schwingungssignal-Phasendifferenzen mit enthaltenem Phasenfehler gemittelte fehlerbehaftete Schwingungssignal-Phasendifferenzen Δϕ_{S,M2} mit enthaltenem Phasenfehler aufgrund der zweiten Messkanalphasendifferenz Δϕ_{M2} berechnet.

Für das dritte Messkanalpaar 16 gilt schließlich, dass die Ermittlung der fehlerbehafteten Schwingungssignal-Phasendifferenzen Δϕ_{S,M3} so realisiert ist, dass mittels des dritten Messkanalpaars 16 mit vernachlässigbarer Messkanalphasendifferenz aus den ersten gemessenen Schwingungssignal-Phasenlagen des zweiten Messkanalpaars 15 und aus den zweiten gemessenen Schwingungssignal-Phasenlagen des zweiten Messkanalpaars 15 entweder mittels eines durchlaufenden digitalen Filters 13c mit Tiefpasseigenschaft tiefpassgefilterte erste Schwingungssignal-Phasenlagen und tiefpassgefilterte zweite Schwingungssignal-Phasenlagen ermittelt werden, ohne dass ein Downsampling im dritten Messkanal bewirkt wird, oder durch Tiefpassfilterung 13c mit Downsampling mit einem dritten Konvertierungsfaktor N3, wobei der dritte Konvertierungsfaktor N3 kleiner ist als der erste Konvertierungsfaktor N1 und der zweite Konvertierungsfaktor N2, tiefpassgefilterte erste Schwingungssignal-Phasenlagen und tiefpassgefilterte zweite Schwingungssignal-Phasenlagen ermittelt werden. Aus zeitlich korrespondierenden tiefpassgefilterten Schwingungssignal-Phasenlagen werden entsprechende fehlerbehaftete Schwingungssignal-Phasendifferenzen Δϕ_{S,M3} mit enthaltenem Phasenfehler aufgrund der zweiten Messkanalphasendifferenz Δϕ_{M2} ermittelt.

Bei dem Ausführungsbeispiel gemäß Fig. 3 ist vorgesehen, dass die Umschaltfrequenz des Kanalumschalters 10 (Multiplexer und Demultiplexer) des ersten Messkanalpaares 9 und die Anregungsfrequenz f₀ des Schwingungserzeugers 4 so aufeinander abgestimmt sind, dass während der Dauer einer Stellung des Kanalumschalters 10 eine Mehrzahl an Messrohrschwingungen erfasst wird, vorliegend nämlich 10 Messrohrschwingungen erfasst werden.

Ferner ist bei dem Ausführungsbeispiel gemäß Fig 3 realisiert, dass die Umschaltfrequenz des Kanalumschalters 10 des ersten Messkanalpaares 9, die Abtastrate des analog/digital-Wandlers 11a des ersten Messkanalpaares 9 und des analog/digital-Wandlers 11b des zweiten Messkanalpaares 15 und die Länge des digitalen Filters 13a mit Tiefpasseigenschaften des ersten Messkanalpaares 9 und die Länge des digitalen Filters 13b des zweiten Messkanalpaares 15 so aufeinander abgestimmt sind, dass die digitalen Filter 13a, 13b mit Abtastwerten einer Stellung des Kanalumschalters 10 im Wesentlichen vollständig befüllt werden.

Darüber hinaus ist implementiert, dass Abtastwerte der analog/digital-Wandler 11a, 11b des ersten Messkanalpaares 9 und/oder des zweiten Messkanalpaares 15 im Bereich der Umschaltzeitpunkte des Kanalumschalters 10 nicht verwendet werden in den digitalen Filtern 13a, 13b mit Tiefpasseigenschaften des ersten Messkanalpaares 9 und des zweiten Messkanalpaares 15. Genauer ist nämlich vorgesehen, dass Abtastwerte der analog/digital-Wandler 11a, 11b des ersten Messkanalpaares 9 und des zweiten Messkanalpaares 15 im Bereich der Umschaltzeitpunkte des Kanalumschalters 10 in den digitalen Filtern 11a, 11b mit Tiefpasseigenschaften des ersten Messkanalpaares 9 und des zweiten Messkanalpaares 15 durch Nullen ersetzt werden.

Desweiteren sind der erste Konvertierungsfaktor N1 und der zweite Konvertierungsfaktor N2 gleich gewählt, was zu einem gleichen Downsampling in beiden Messkanalpaaren 9, 15 führt.

Ferner ist den digitalen Filtern 13c mit Tiefpasseigenschaft im dritten Messkanalpaar 16 ein weiteres digitales Filter 19 zu Realisierung eines Downsampling nachgeschaltet, wobei das Downsampling mit Konvertierungsfaktor N4 so gewählt ist, dass die nachfolgende Berechnung der fehlerbehafteten Schwingungssignal-Phasendifferenzen Δϕ_{S,M3} und der fehlerfreien Schwingungssignal-Phasendifferenzen Δϕ_{S} mit jedem nach dem Downsampling bereitgestellten Wertepaar von tiefpassgefilterten Schwingungssignal-Phasenlagen erfolgen kann; so wird die Hardware optimal eingesetzt.

In dem dargestellten Ausführungsbeispiel sind das digitale Filter 13a des ersten Messkanalpaares 9 mit Tiefpasseigenschaft und das digitale Filter 13b des zweiten Messkanalpaares 15 mit Tiefpasseigenschaft als FIR-Filter (finite impulse response filter) realisiert.

### Bezugszeichen

- 1: Verfahren
- 2: Coriolis-Massedurchflussmessgerät
- 3: Messrohr
- 4: Schwingungserzeuger
- 5: Schwingungsaufnehmer
- 6: Steuer- und Auswerteeinheit
- 7: erstes Schwingungssignal
- 8: zweites Schwingungssignal
- 9: erstes Messkanalpaar
- 9a, 9b: erster, zweiter Messkanal des ersten Messkanalpaars
- 10: Kanalumschaltung
- 11, 11a, 11b: analog/digital-Wandlung
- 12, 12a, 12b: Phasendetektion
- 13, 13a, 13b, 13c: digitale Tiefpassfilterung
- 14, 14a, 14b, 14c: Mittelwertbildung
- 15: zweites Messkanalpaar
- 15a, 15b: erster, zweiter Messkanal des zweiten Messkanalpaars
- 16: drittes Messkanalpaar
- 16a, 16b: erster, zweiter Messkanal des dritten Messkanalpaars
- 17, 18: Differenzbildung
- 19: digitales Filter mit downsampling-Eigenschaften
- ϕ_{S1}: erste Schwingungssignal-Phasenlage
- ϕ_{S2}: zweite Schwingungssignal-Phasenlage
- Δϕ_{S}: Schwingungssignal-Phasendifferenz
- Δϕ_{M1}: erste Messkanalphasendifferenz
- Δϕ_{M2}: zweite Messkanalphasendifferenz
- Δϕ_{S, M1}: Schwingungssignal-Phasendifferenz des ersten Messkanals
- Δϕ_{S, M2}: Schwingungssignal-Phasendifferenz des zweiten Messkanals
- Δϕ_{S, M3}: Schwingungssignal-Phasendifferenz des dritten Messkanals

## Patentansprüche

1. Verfahren (1) zum Betreiben eines Coriolis-Massedurchflussmessgeräts (2), wobei das Coriolis-Massedurchflussmessgerät (2) wenigstens ein Messrohr (3), wenigstens einen Schwingungserzeuger (4), wenigstens zwei Schwingungsaufnehmer (5) und wenigstens eine Steuer- und Auswerteeinheit (6) aufweist, wobei das Messrohr (3) von einem Medium durchströmbar ist, wobei der Schwingungserzeuger (4) das Messrohr in eine Schwingung mit einer Anregungsfrequenz (f₀) anregt, wobei der erste und der zweite Schwingungsaufnehmer (5) die Schwingungen des Messrohrs (3) einlaufseitig und auslaufseitig erfassen und als erstes Schwingungssignal (7) mit einer ersten Schwingungssignal-Phasenlage (ϕ_{S1}) und als zweites Schwingungssignal (8) mit einer zweiten Schwingungssignal-Phasenlage (ϕ_{S2}) bereitstellen, wobei die Steuer- und Auswerteeinheit (6) eine Schwingungssignal-Phasendifferenz (Δϕ_{S}) zwischen dem ersten Schwingungssignal (7) und dem zweiten Schwingungssignal (8) bestimmt und aus der Schwingungssignal-Phasendifferenz (Δϕ_{S}) einen Massedurchfluss ermittelt,
**dadurch gekennzeichnet,**
**dass** mittels eines ersten Messkanalpaars (9) mit einer ersten Messkanalphasendifferenz (Δϕ_{M1}) aus den Schwingungssignalen (7, 8) durch Kanalumschaltung (10), analog/digital-Wandlung (11a), Phasendetektion (12a), digitale Tiefpassfilterung (13a) mit dadurch bewirktem Downsampling mit einem ersten Konvertierungsfaktor (N1) und Mittelwertbildung (14a) fehlerfreie Schwingungssignal-Phasendifferenzen (Δϕ_{S,M1}) ohne enthaltenen Phasenfehler aufgrund herausgemittelter erster Messkanalphasendifferenz (Δϕ_{M1}) berechnet werden,
**dass** mittels eines zweiten Messkanalpaars (15) mit einer zweiten Messkanalphasendifferenz (Δϕ_{M2}) aus den Schwingungssignalen (7, 8) durch analog/digital-Wandlung (11b), Phasendetektion (12b), digitale Tiefpassfilterung (13b) mit dadurch bewirktem Downsampling mit einem zweiten Konvertierungsfaktor (N2) und Mittelwertbildung (14b) gemittelte fehlerbehaftete Schwingungssignal-Phasendifferenzen (Δϕ_{S,M2}) mit enthaltenem Phasenfehler in Form der zweiten Messkanalphasendifferenz (Δϕ_{M2}) berechnet werden, dass mittels eines dritten Messkanalpaars (16) mit vernachlässigbarer Messkanalphasendifferenz die nach der Phasendetektion (12b) im zweiten Messkanalpaar (15) gemessenen Schwingungssignal-Phasenlagen des zweiten Messkanalpaars (15) erfasst werden und entweder durch durchlaufende Tiefpassfilterung (13c) ohne Downsampling oder durch Tiefpassfilterung (13c) mit Downsampling mit einem dritten Konvertierungsfaktor (N3,) wobei der dritte Konvertierungsfaktor (N3) kleiner oder größer ist als der erste Konvertierungsfaktor (N1) und der zweite Konvertierungsfaktor (N2), fehlerbehaftete Schwingungssignal-Phasendifferenzen (Δϕ_{S,M3}) mit enthaltenem Phasenfehler aufgrund der zweiten Messkanalphasendifferenz (Δϕ_{M2}) ermittelt werden,
**dass** durch Differenzbildung (17) aus den gemittelten fehlerbehafteten Schwingungssignal-Phasendifferenzen (Δϕ_{S,M2}) mit enthaltenem Phasenfehler des zweiten Messkanalpaares (15) und den fehlerfreien Schwingungssignal-Phasendifferenzen (Δϕ_{S,M1}) ohne enthaltenen Phasenfehler des ersten Messkanalpaares (9) die zweite Messkanalphasendifferenz (Δϕ_{M2}) ermittelt wird und
**dass** von den fehlerbehafteten Schwingungssignal-Phasendifferenzen (Δϕ_{S,M3}) des dritten Messkanalpaares (16) die ermittelte zweite Messkanalphasendifferenz (Δϕ_{M2}) abgezogen wird und so fehlerfreie Schwingungssignal-Phasendifferenzen (Δϕ_{S}) ohne enthaltenen Phasenfehler erhalten und der Ermittlung des Massedurchflusses zugrunde gelegt werden.

2. Verfahren (1) nach Anspruch 1, **dadurch gekennzeichnet, dass** die Ermittlung der fehlerfreien Schwingungssignal-Phasendifferenzen (Δϕ_{M1}) mittels des ersten Messkanalpaares (9) so realisiert ist, dass die Schwingungssignale (7, 8) mittels des ersten Messkanalpaars (9) mit einem ersten Messkanal (9a) und einem zweiten Messkanal (9b) und mit einer ersten Messkanalphasendifferenz (Δϕ_{M1}) zwischen dem ersten Messkanal (9a) und dem zweiten Messkanal (9b) verarbeitet werden, wobei das erste Schwingungssignal (7) und das zweite Schwingungssignal (8) im ersten Messkanalpaar (9) eingangsseitig mit einem ersten Kanalumschalter (10) wechselweise über den ersten Messkanal (9a) und den zweiten Messkanal (9b) geführt werden, die Schwingungssignale (7, 8) entweder nach dem Kanalumschalter (10) durch wenigstens einen analog/digital-Wandler (11a) mit einer ersten Abtastrate abgetastet werden und die abgetasteten Schwingungssignale mit einem zweiten Kanalumschalter (10) auf ihren ursprünglichen Messkanal (9a, 9b) geführt werden oder die Schwingungssignale nach dem Kanalumschalter (10) mit einem zweiten Kanalumschalter (10) auf ihren ursprünglichen Messkanal (9a, 9b) geführt werden und dann durch wenigstens einen analog/digitalWandler (11a) mit einer ersten Abtastrate abgetastet werden, und mit wenigstens einem Phasendetektor (12a) aus den abgetasteten ersten Schwingungssignalen erste gemessene Schwingungssignal-Phasenlagen ermittelt werden und aus den abgetasteten zweiten Schwingungssignalen zweite gemessene Schwingungssignal-Phasenlagen ermittelt werden, aus einer Mehrzahl der in jeweils einer Stellung der Kanalumschalter erhaltenen ersten und zweiten gemessenen Schwingungssignal-Phasenlagen durch wenigstens ein digitales Filter (13a) mit Tiefpasseigenschaft eine tiefpassgefilterte erste Schwingungssignal-Phasenlage und eine tiefpassgefilterte zweite Schwingungssignal-Phasenlage ermittelt werden, sodass also ein Downsampling mit dem ersten Konvertierungsfaktor (N1) im ersten Messkanalpaar (9) bewirkt wird, und aus zeitlich korrespondierenden tiefpassgefilterten Schwingungssignal-Phasenlagen in jeweils einer Stellung des Kanalumschalters (10) entsprechende fehlerbehaftete Schwingungssignal-Phasendifferenzen mit enthaltenem Phasenfehler aufgrund der ersten Messkanalphasendifferenz (Δϕ_{M1}) ermittelt werden und durch Mittelwertbildung aus mehreren fehlerbehafteten Schwingungssignal-Phasendifferenzen mit enthaltenem Phasenfehler fehlerfreie Schwingungssignal-Phasendifferenzen (Δϕ_{SM,1}) ohne enthaltenen Phasenfehler berechnet werden.

3. Verfahren (1) nach Anspruch 1 oder 2, **dadurch gekennzeichnet, dass** die Ermittlung der gemittelten fehlerbehafteten Schwingungssignal-Phasendifferenzen (Δϕ_{S,M2}) mittels des zweiten Messkanalpaares (15) dadurch realisiert ist, dass die Schwingungssignale (7, 8) mittels des zweiten Messkanalpaars (15) mit einem ersten Messkanal (15a) und einem zweiten Messkanal (15b) und mit einer zweiten Messkanalphasendifferenz (Δϕ_{M2}) zwischen dem ersten Messkanal (15a) und dem zweiten Messkanal (15b) verarbeitet werden, wobei das erste Schwingungssignal (7) und das zweite Schwingungssignal (8) durch wenigstens einen analog/digital-Wandler (11b) mit einer ersten Abtastrate abgetastet werden und mit wenigstens einem Phasendetektor (12b) aus den abgetasteten ersten Schwingungssignalen erste gemessene Schwingungssignal-Phasenlagen ermittelt werden und aus den abgetasteten zweiten Schwingungssignalen zweite gemessene Schwingungssignal-Phasenlagen ermittelt werden, aus einer Mehrzahl der während einer Stellung der Kanalumschalter (10) des ersten Messkanalpaars (9) im zweiten Messkanalpaar (15) erhaltenen ersten und zweiten gemessenen Schwingungssignal-Phasenlagen durch wenigstens ein digitales Filter (13b) mit Tiefpasseigenschaft eine tiefpassgefilterte erste Schwingungssignal-Phasenlage und eine tiefpassgefilterte zweite Schwingungssignal-Phasenlage ermittelt werden, sodass also ein Downsampling mit dem zweiten Konvertierungsfaktor (N2) im zweiten Messkanalpaar (9) bewirkt wird, und aus zeitlich korrespondierenden tiefpassgefilterten Schwingungssignal-Phasenlagen entsprechende fehlerbehaftete Schwingungssignal-Phasendifferenzen mit enthaltenem Phasenfehler aufgrund der zweiten Messkanalphasendifferenz (Δϕ_{M2}) ermittelt werden und durch Mittelwertbildung (14b) aus mehreren fehlerbehafteten Schwingungssignal-Phasendifferenzen mit enthaltenem Phasenfehler gemittelte fehlerbehaftete Schwingungssignal-Phasendifferenzen (Δϕ_{S,M2}) mit enthaltenem Phasenfehler aufgrund der zweiten Messkanalphasendifferenz (Δϕ_{M2}) berechnet werden.

4. Verfahren (1) nach einem der Ansprüche 1 bis 3, **dadurch gekennzeichnet, dass** die Ermittlung der fehlerbehafteten Schwingungssignal-Phasendifferenzen (Δϕ_{S,M3}) mittels des dritten Messkanalpaares (16) so realisiert ist, dass mittels des dritten Messkanalpaars (16) mit vernachlässigbarer Messkanalphasendifferenz aus den ersten gemessenen Schwingungssignal-Phasenlagen des zweiten Messkanalpaars (15) und aus den zweiten gemessenen Schwingungssignal-Phasenlagen des zweiten Messkanalpaars (15) entweder mittels eines durchlaufenden digitalen Filters (13c) mit Tiefpasseigenschaft tiefpassgefilterte erste Schwingungssignal-Phasenlagen und tiefpassgefilterte zweite Schwingungssignal-Phasenlagen ermittelt werden, ohne dass ein Downsampling im dritten Messkanal bewirkt wird, oder durch Tiefpassfilterung (13c) mit Downsampling mit einem dritten Konvertierungsfaktor (N3), wobei der dritte Konvertierungsfaktor (N3) kleiner oder größer ist als der erste Konvertierungsfaktor (N1) und der zweite Konvertierungsfaktor (N2), tiefpassgefilterte erste Schwingungssignal-Phasenlagen und tiefpassgefilterte zweite Schwingungssignal-Phasenlagen ermittelt werden, und aus zeitlich korrespondierenden tiefpassgefilterten Schwingungssignal-Phasenlagen entsprechende fehlerbehaftete Schwingungssignal-Phasendifferenzen (Δϕ_{S,M3}) mit enthaltenem Phasenfehler aufgrund der zweiten Messkanalphasendifferenz (Δϕ_{M2}) ermittelt werden.

5. Verfahren (1) nach einem der Ansprüche 1 bis 4, **dadurch gekennzeichnet, dass** die Umschaltfrequenz des Kanalumschalters (10) des ersten Messkanalpaares (9) und die Anregungsfrequenz (f₀) des Schwingungserzeugers (4) so aufeinander abgestimmt sind, dass während der Dauer einer Stellung des Kanalumschalters (10) wenigstens eine Messrohrschwingung erfasst wird, vorzugsweise eine Mehrzahl an Messrohrschwingungen erfasst wird, besonders bevorzugt zwischen 4 und 12 Messrohrschwingungen erfasst werden.

6. Verfahren (1) nach einem der Ansprüche 1 bis 5, **dadurch gekennzeichnet, dass** die Umschaltfrequenz des Kanalumschalters (10) des ersten Messkanalpaares (9), die Abtastrate des analog/digital-Wandlers (11a) des ersten Messkanalpaares (9) und/oder des analog/digital-Wandlers (11b) des zweiten Messkanalpaares (15) und die Länge des digitalen Filters (13a) mit Tiefpasseigenschaften des ersten Messkanalpaares (9) und/oder des digitalen Filters (13b) des zweiten Messkanalpaares (15) so aufeinander abgestimmt sind, dass das digitale Filter (13a, 13b) mit Abtastwerten einer Stellung des Kanalumschalters (10) im Wesentlichen vollständig befüllt wird.

7. Verfahren (1) nach Anspruch 6, **dadurch gekennzeichnet, dass** Abtastwerte der analog/digital-Wandler (11a, 11b) des ersten Messkanalpaares (9) und/oder des zweiten Messkanalpaares (15) im Bereich der Umschaltzeitpunkte des Kanalumschalters (10) nicht verwendet werden in den digitalen Filtern (13a, 13b) mit Tiefpasseigenschaften des ersten Messkanalpaares (9) und/oder des zweiten Messkanalpaares (15).

8. Verfahren (1) nach Anspruch 6 oder 7, **dadurch gekennzeichnet, dass** Abtastwerte der analog/digital-Wandler (11a, 11b) des ersten Messkanalpaares (9) und/oder des zweiten Messkanalpaares (15) im Bereich der Umschaltzeitpunkte des Kanalumschalters (10) in den digitalen Filtern (11a, 11b) mit Tiefpasseigenschaften des ersten Messkanalpaares (9) und/oder des zweiten Messkanalpaares (15) durch Nullen ersetzt werden.

9. Verfahren (1) nach einem der Ansprüche 1 bis 8, **dadurch gekennzeichnet, dass** den digitalen Filtern (13c) mit Tiefpasseigenschaft im dritten Messkanalpaar (16) ein weiteres digitales Filter (19) zu Realisierung eines Downsampling nachgeschaltet ist, insbesondere wobei das Downsampling mit Konvertierungsfaktor (N4) so gewählt ist, dass die nachfolgende Berechnung der fehlerbehafteten Schwingungssignal-Phasendifferenzen (Δϕ_{S,M3}) und der fehlerfreien Schwingungssignal-Phasendifferenzen (Δϕ_{S}) mit jedem nach dem Downsampling bereitgestellten Wertepaar von tiefpassgefilterten Schwingungssignal-Phasenlagen erfolgen kann.

10. Verfahren (1) nach einem der Ansprüche 1 bis 9, **dadurch gekennzeichnet, dass** das digitale Filter (13a) des ersten Messkanalpaares (9) mit Tiefpasseigenschaft und/oder das digitale Filter (13b) des zweiten Messkanalpaares (15) mit Tiefpasseigenschaft und/oder das digitale Filter (13c) des dritten Messkanalpaares (16) mit Tiefpasseigenschaft als FIR-Filter (finite impulse response filter) realisiert sind.

11. Verfahren (1) nach einem der Ansprüche 1 bis 10, **dadurch gekennzeichnet, dass** der erste Konvertierungsfaktor (N1) und der zweite Konvertierungsfaktor (N2) gleich sind.

12. Coriolis-Massedurchflussmessgerät (2) mit wenigstens einem Messrohr (3), wenigstens einem Schwingungserzeuger (4), wenigstens zwei Schwingungsaufnehmern (5) und wenigstens einer Steuer- und Auswerteeinheit (6), wobei das Messrohr (3) von einem Medium durchströmbar ist, wobei der Schwingungserzeuger (4) das Messrohr (3) in eine Schwingung mit einer Anregungsfrequenz (f₀) anregt, wobei der erste und der zweite Schwingungsaufnehmer (5) die Schwingungen des Messrohrs (3) einlaufseitig und auslaufseitig erfassen und als erstes Schwingungssignal (7) mit einer ersten Schwingungssignal-Phasenlage (ϕ_{S1}) und als zweites Schwingungssignal (8) mit einer zweiten Schwingungssignal-Phasenlage ϕ_{S2} bereitstellen, wobei die Steuer- und Auswerteeinheit (6) eine Schwingungssignal-Phasendifferenz (Δϕ_{S}) zwischen dem ersten Schwingungssignal (7) und dem zweiten Schwingungssignal (8) bestimmt und aus der Schwingungssignal-Phasendifferenz (Δϕ_{S}) einen Massedurchfluss ermittelt,
**dadurch gekennzeichnet,**
**dass** die Steuer- und Auswerteeinheit (6) so ausgebildet ist,
**dass** mittels eines ersten Messkanalpaars (9) mit einer ersten Messkanalphasendifferenz (Δϕ_{M1}) aus den Schwingungssignalen (7, 8) durch Kanalumschaltung (10), analog/digital-Wandlung (11a), Phasendetektion (12a), digitale Tiefpassfilterung (13a) mit dadurch bewirktem Downsampling mit einem ersten Konvertierungsfaktor (N1) und Mittelwertbildung fehlerfreie Schwingungssignal-Phasendifferenzen (Δϕ_{S,M1}) ohne enthaltenen Phasenfehler aufgrund herausgemittelter erster Messkanalphasendifferenz (Δϕ_{M1}) berechnet werden,
**dass** mittels eines zweiten Messkanalpaars (15) mit einer zweiten Messkanalphasendifferenz (Δϕ_{M2}) aus den Schwingungssignalen (7, 8) durch digitalanalog-Wandlung (11b), Phasendetektion (12b), digitale Tiefpassfilterung (13b) mit dadurch bewirktem Downsampling mit einem zweiten Konvertierungsfaktor (N2) und Mittelwertbildung gemittelte fehlerbehaftete Schwingungssignal-Phasendifferenzen (Δϕ_{SM2}) mit enthaltenem Phasenfehler in Form der zweiten Messkanalphasendifferenz (Δϕ_{M2}) berechnet werden,
**dass** mittels eines dritten Messkanalpaars (16) mit vernachlässigbarer Messkanalphasendifferenz die nach der Phasendetektion (12b) im zweiten Messkanalpaar (15) gemessenen Schwingungssignal-Phasenlagen des zweiten Messkanalpaars (15) erfasst werden und entweder durch durchlaufende Tiefpassfilterung (13c) ohne Downsampling oder durch Tiefpassfilterung (13c) mit Downsampling mit einem dritten Konvertierungsfaktor (N3), wobei der dritte Konvertierungsfaktor (N3) kleiner oder größer ist als der erste Konvertierungsfaktor (N1) und der zweite Konvertierungsfaktor (N2), fehlerbehaftete Schwingungssignal-Phasendifferenzen (Δϕ_{S,M3}) mit enthaltenem Phasenfehler aufgrund der zweiten Messkanalphasendifferenz (Δϕ_{M2}) ermittelt werden,
**dass** durch Differenzbildung (17) aus den gemittelten fehlerbehafteten Schwingungssignal-Phasendifferenzen (Δϕ_{S,M2}) mit enthaltenem Phasenfehler des zweiten Messkanalpaares (15) und den fehlerfreien Schwingungssignal-Phasendifferenzen (Δϕ_{S,M1}) ohne enthaltenen Phasenfehler des ersten Messkanalpaares (9) die zweite Messkanalphasendifferenz (Δϕ_{M2}) ermittelt wird und
**dass** von den fehlerbehafteten Schwingungssignal-Phasendifferenzen (Δϕ_{S,M3}) des dritten Messkanalpaares (16) die ermittelte zweite Messkanalphasendifferenz (Δϕ_{M2}) abgezogen wird und so fehlerfreie Schwingungssignal-Phasendifferenzen (Δϕ_{S}) ohne enthaltenen Phasenfehler erhalten und der Ermittlung des Massedurchflusses zugrunde gelegt werden.

13. Coriolis-Massedurchflussmessgerät (2) nach Anspruch 12, **dadurch gekennzeichnet, dass** die Steuer- und Auswerteeinheit (6) ausgebildet ist, dass sie im Betrieb des Coriolis-Massedurchflussmessgeräts (2) das Verfahren (1) gemäß einem der Patentansprüche 2 bis 11 ausführt.

## Claims

1. Method (1) for operating a Coriolis mass flowmeter (2), wherein the Coriolis mass flowmeter (2) has at least one measuring tube (3), at least one oscillation generator (4), at least two oscillation sensors (5) and at least one control and evaluation unit (6), wherein it is possible for a medium to flow through the measuring tube (3), wherein the oscillation generator (4) excites the measuring tube (3) into oscillation with an excitation frequency (f₀), wherein the first and the second oscillation sensors (5) capture the oscillations of the measuring tube (3) on the inlet side and on the outlet side and provide them as a first oscillation signal (7) with a first oscillation signal phase position (cpsi) and as a second oscillation signal (8) with a second oscillation signal phase position (ϕ_{S2}), wherein the control and evaluation unit (6) determines an oscillation signal phase difference (Δϕ_{S}) between the first oscillation signal (7) and the second oscillation signal (8) and determines a mass flow rate from the oscillation signal phase difference (Δϕ_{S}),
**characterized in**
**that**, by means of a first measuring channel pair (9) with a first measuring channel phase difference (Δϕ_{M1}) from the oscillation signals (7, 8) by channel switching (10), analog/digital conversion (11a), phase detection (12a), digital low-pass filtering (13a) with downsampling effected thereby with a first conversion factor (N1) and averaging (14a), error-free oscillation signal phase differences (Δϕ_{S,M1}) are calculated without contained phase errors due to an averaged-out first measuring channel phase difference (Δϕ_{M1}),
**that**, by means of a second measuring channel pair (15) with a second measuring channel phase difference (Δϕ_{M2}) from the oscillation signals (7, 8) by analog/digital conversion (11b), phase detection (12b), digital low-pass filtering (13b) with downsampling effected thereby with a second conversion factor (N2) and averaging (14b), averaged error-containing oscillation signal phase differences (Δϕ_{S,M2}) with contained phase error in the form of the second measuring channel phase difference (Δϕ_{M2}) are calculated,
**that**, by means of a third measuring channel pair (16) with negligible measuring channel phase difference, the oscillation signal phase positions of the second measuring channel pair (15) measured after the phase detection (12b) in the second measuring channel pair (15) are captured and either by continuous low-pass filtering (13c) without downsampling or by low-pass filtering (13c) with downsampling with a third conversion factor (N3), wherein the third conversion factor (N3) is smaller or larger than the first conversion factor (N1) and the second conversion factor (N2), error-containing oscillation signal phase differences (Δϕ_{S,M3}) with included phase error are determined on the basis of the second measuring channel phase difference (Δϕ_{M2}),
**that**, by difference formation (17) from the averaged error-containing oscillation signal phase differences (Δϕ_{S,M2}) with contained phase error of the second measuring channel pair (15) and the error-free oscillation signal phase differences (Δϕ_{S,M1}) without contained phase error of the first measuring channel pair (9), the second measuring channel phase difference (Δϕ_{M2}) is determined and
**that** the determined second measuring channel phase difference (Δϕ_{M2}) is subtracted from the error-containing oscillation signal phase differences (Δϕ_{S,M3}) of the third measuring channel pair (16) and thus error-free oscillation signal phase differences (Δϕ_{S}) without contained phase error are obtained and are used as a basis for determining the mass flow rate.

2. Method (1) according to claim 1, **characterized in that** the determination of the error-free oscillation signal phase differences (Δϕ_{M1}) by means of the first measuring channel pair (9) is implemented in such a way that the oscillation signals (7, 8) are processed by means of the first measuring channel pair (9) with a first measuring channel (9a) and a second measuring channel (9b) and with a first measuring channel phase difference (Δϕ_{M1}) between the first measuring channel (9a) and the second measuring channel (9b), wherein the first oscillation signal (7) and the second oscillation signal (8) in the first measuring channel pair (9) are routed on the input side alternately via the first measuring channel (9a) and the second measuring channel (9b) by means of a first channel switch (10), the oscillation signals (7, 8) are either sampled downstream of the channel switch (10) by at least one analog/digital converter (11a) at a first sampling rate and the sampled oscillation signals are fed back to their original measuring channel (9a, 9b) or the oscillation signals after the channel switch (10) are fed to their original measuring channel (9a, 9b) by means of a second channel switch (10) and are then sampled by at least one analog/digital converter (11a) at a first sampling rate, and first measured oscillation signal phase positions are determined from the sampled first oscillation signals by means of at least one phase detector (12a) and second measured oscillation signal phase positions are determined from the sampled second oscillation signals, a low-pass filtered first oscillation signal phase position and a low-pass filtered second oscillation signal phase position are determined from a plurality of the first and second measured oscillation signal phase positions obtained in a respective position of the channel switches by means of at least one digital filter (13a) with low-pass characteristic, so that a downsampling with the first conversion factor (N1) is effected in the first measuring channel pair (9), and, from temporally corresponding low-pass-filtered oscillation signal phase positions in each case in one position of the channel switch (10), corresponding error-containing oscillation signal phase differences with contained phase error are determined on the basis of the first measuring channel phase difference (Δϕ_{M1}) and error-free oscillation signal phase differences (Δϕ_{SM,1}) without contained phase error are calculated by averaging from a plurality of error-containing oscillation signal phase differences with contained phase error.

3. Method (1) according to claim 1 or 2, **characterized in that** the determination of the averaged error-containing oscillation signal phase differences (Δϕ_{S,M2}) by means of the second measuring channel pair (15) is implemented in that the oscillation signals (7, 8) are processed by means of the second measuring channel pair (15) with a first measuring channel (15a) and a second measuring channel (15b) and with a second measuring channel phase difference (Δϕ_{M2}) between the first measuring channel (15a) and the second measuring channel (15b), wherein the first oscillation signal (7) and the second oscillation signal (8) are sampled by at least one analog/digital converter (11b) at a first sampling rate and first measured oscillation signal phase positions are determined from the sampled first oscillation signals by at least one phase detector (12b) and second measured oscillation signal phase positions are determined from the sampled second oscillation signals, a low-pass filtered first oscillation signal phase position and a low-pass filtered second oscillation signal phase position are determined from a plurality of the first and second measured oscillation signal phase positions obtained in the second measuring channel pair (15) during setting of the channel switches (10) of the first measuring channel pair (9) by means of at least one digital filter (13b) having a low-pass characteristic, so that downsampling is thus effected with the second conversion factor (N2) in the second measuring channel pair (9) and corresponding error-containing oscillation signal phase differences with contained phase error are determined from temporally corresponding low-pass-filtered oscillation signal phase positions on the basis of the second measuring channel phase difference (Δϕ_{M2}), and averaged error-containing oscillation signal phase differences (Δϕ_{S,M2}) with included phase error based on the second measuring channel phase difference (Δϕ_{M2}) can be calculated by averaging (14b) a plurality of error-containing oscillation signal phase differences with contained phase error.

4. Method (1) according to any one of claims 1 to 3, **characterized in that** the determination of the error-containing oscillation signal phase differences (Δϕ_{S,M3}) by means of the third measuring channel pair (16) is implemented in such a way that - by means of the third measuring channel pair (16) with negligible measuring channel phase difference from the first measured oscillation signal phase positions of the second measuring channel pair (15) and from the second measured oscillation signal phase positions of the second measuring channel pair (15) - either low-pass filtered first oscillation signal phase positions and low-pass filtered second oscillation signal phase positions are determined by means of a continuous digital filter (13c) with low-pass characteristic, without downsampling being effected in the third measuring channel, or low-pass-filtered first oscillation signal phase positions and low-pass-filtered second oscillation signal phase positions are determined by low-pass filtering (13c) with downsampling with a third conversion factor (N3), wherein the third conversion factor (N3) is smaller or larger than the first conversion factor (N1) and the second conversion factor (N2), and, from temporally corresponding low-pass-filtered oscillation signal phase positions, corresponding error-containing oscillation signal phase differences (Δϕ_{S,M3}) with contained phase error are determined on the basis of the second measuring channel phase difference (Δϕ_{M2}).

5. Method (1) according to any one of claims 1 to 4, **characterized in that** the switch frequency of the channel switch (10) of the first measuring channel pair (9) and the excitation frequency (f₀) of the oscillation generator (4) are matched to one another in such a way that during the duration of one position of the channel switch (10) at least one measuring tube oscillation is captured, preferably a plurality of measuring tube oscillations is captured, particularly preferably between 4 and 12 measuring tube oscillations are captured.

6. Method (1) according to any one of claims 1 to 5, **characterized in that** the switching frequency of the channel switch (10) of the first measuring channel pair (9), the sampling rate of the analog/digital converter (11a) of the first measuring channel pair (9) and/or of the analog/digital converter (11b) of the second measuring channel pair (15) and the length of the digital filter (13a) with low-pass characteristics of the first measuring channel pair (9) and/or of the digital filter (13b) of the second measuring channel pair (15) are matched to one another in such a way that the digital filter (13a, 13b) is substantially completely filled with samples of a position of the channel switch (10).

7. Method (1) according to claim 6, **characterized in that** the sampled values of the analog/digital converters (11a, 11b) of the first measuring channel pair (9) and/or of the second measuring channel pair (15) in the range of the switching times of the channel switch (10) are not used in the digital filters (13a, 13b) with low-pass characteristics of the first measuring channel pair (9) and/or of the second measuring channel pair (15).

8. Method (1) according to claim 6 or 7, **characterized in that** sampled values of the analog/digital converters (11a, 11b) of the first measuring channel pair (9) and/or of the second measuring channel pair (15) are replaced by zeros in the range of the switching times of the channel switch (10) in the digital filters (11a, 11b) with low-pass characteristics of the first measuring channel pair (9) and/or of the second measuring channel pair (15).

9. Method (1) according to any one of claims 1 to 8, **characterized in that** the digital filters (13c) with low-pass characteristics in the third measuring channel pair (16) are followed by a further digital filter (19) for implementing a downsampling, in particular the downsampling with conversion factor (N4) being selected such that the subsequent calculation of the error-containing oscillation signal phase differences (Δϕ_{S,M3}) and the error-free oscillation signal phase differences (Δϕ_{S}) can be carried out with each pair of values of low-pass filtered oscillation signal phase positions provided after the downsampling.

10. Method (1) according to any one of claims 1 to 9, **characterized in that** the digital filter (13a) of the first measuring channel pair (9) with low-pass characteristic and/or the digital filter (13b) of the second measuring channel pair (15) with low-pass characteristic and/or the digital filter (13c) of the third measuring channel pair (16) with low-pass characteristic are implemented as FIR filters (finite impulse response filters).

11. Method (1) according to any one of claims 1 to 10, **characterized in that** the first conversion factor (N1) and the second conversion factor (N2) are equal.

12. Coriolis mass flowmeter (2) having at least one measuring tube (3), at least one oscillation generator (4), at least two oscillation sensors (5) and at least one control and evaluation unit (6), wherein it is possible for a medium to flow through the measuring tube (3), wherein the oscillation generator (4) excites the measuring tube (3) into oscillation with an excitation frequency (f₀), wherein the first and the second oscillation sensor (5) capture the oscillations of the measuring tube (3) on the inlet side and on the outlet side and provide them as a first oscillation signal (7) with a first oscillation signal phase position (cpsi) and as a second oscillation signal (8) with a second oscillation signal phase position ϕ_{S2}, wherein the control and evaluation unit (6) determines an oscillation signal phase difference (Δϕ_{S}) between the first oscillation signal (7) and the second oscillation signal (8) and determines a mass flow rate from the oscillation signal phase difference (Δϕ_{S}),
**characterized in**
**that** the control and evaluation unit (6) is designed in such a way
**that**, by means of a first measuring channel pair (9) with a first measuring channel phase difference (Δϕ_{M1}) from the oscillation signals (7, 8) by channel switching (10), analog/digital conversion (11a), phase detection (12a), digital low-pass filtering (13a) with downsampling effected thereby with a first conversion factor (N1) and averaging (14a), error-free oscillation signal phase differences (Δϕ_{S,M1}) are calculated without contained phase errors due to an averaged-out first measuring channel phase difference (Δϕ_{M1})
**that**, by means of a second measuring channel pair (15) with a second measuring channel phase difference (Δϕ_{M2}) from the oscillation signals (7, 8) by analog/digital conversion (11b), phase detection (12b), digital low-pass filtering (13b) with downsampling effected thereby with a second conversion factor (N2) and averaging (14b), averaged error-containing oscillation signal phase differences (Δϕ_{S,M2}) with contained phase error in the form of the second measuring channel phase difference (Δϕ_{M2}) are calculated
**that**, by means of a third measuring channel pair (16) with negligible measuring channel phase difference, the oscillation signal phase positions of the second measuring channel pair (15) measured after the phase detection (12b) in the second measuring channel pair (15) are captured and either by continuous low-pass filtering (13c) without downsampling or by low-pass filtering (13c) with downsampling with a third conversion factor (N3), wherein the third conversion factor (N3) is smaller or larger than the first conversion factor (N1) and the second conversion factor (N2), error-containing oscillation signal phase differences (Δϕ_{S,M3}) with included phase error are determined on the basis of the second measuring channel phase difference (Δϕ_{M2})
**that**, by difference formation (17) from the averaged error-containing oscillation signal phase differences (Δϕ_{S,M2}) with contained phase error of the second measuring channel pair (15) and the error-free oscillation signal phase differences (Δϕ_{S,M1}) without contained phase error of the first measuring channel pair (9), the second measuring channel phase difference (Δϕ_{M2}) is determined and
**that** the determined second measuring channel phase difference (Δϕ_{M2}) is subtracted from the error-containing oscillation signal phase differences (Δϕ_{S,M3}) of the third measuring channel pair (16) and thus error-free oscillation signal phase differences (Δϕ_{S}) without contained phase error are obtained and are used as a basis for determining the mass flow rate.

13. Coriolis mass flowmeter (2) according to claim 12, **characterized in that** the control and evaluation unit (6) is designed to carry out the method (1) according to any one of the patent claims 2 to 11 during operation of the Coriolis mass flowmeter (2).

## Revendications

1. Procédé (1) pour faire fonctionner un débitmètre massique à effet Coriolis (2), le débitmètre massique à effet Coriolis (2) possédant au moins un tube de mesure (3), au moins un générateur d'oscillations (4), au moins deux enregistreurs d'oscillations (5) et au moins une unité de commande et d'interprétation (6), le tube de mesure (3) pouvant être traversé par un flux de fluide, le générateur d'oscillations (4) excitant le tube de mesure en une oscillation avec une fréquence d'excitation (f₀), le premier et le deuxième enregistreur d'oscillations (5) détectant les oscillations du tube de mesure (3) du côté de l'entrée et du côté de la sortie et les fournissant sous la forme d'un premier signal d'oscillation (7) avec une première phase de signal d'oscillation (ϕ_{S1}) et sous la forme d'un deuxième signal d'oscillation (8) avec une deuxième phase de signal d'oscillation (ϕ_{S2}), l'unité de commande et d'interprétation (6) déterminant une différence de phases de signal d'oscillation (Δϕ_{S}) entre le premier signal d'oscillation (7) et le deuxième signal d'oscillation (8) et identifiant un débit massique à partir de la différence de phases de signal d'oscillation (Δϕ_{S}), **caractérisé en ce**
**qu'**au moyen d'une première paire de canaux de mesure (9), avec une première différence de phases de canaux de mesure (Δϕ_{M1}), des différences de phases de signal d'oscillation sans erreur (Δϕ_{S,M1}), ne contenant pas d'erreurs de phase en raison du calcul de la première différence de phases de canaux de mesure (Δϕ_{M1}) moyennée, sont calculées à partir des signaux d'oscillation (7, 8) par inversion de canaux (10), conversion analogique/numérique (11a), détection de phase (12a), filtrage passe-bas numérique (13a) avec le sous-échantillonnage ainsi produit avec un premier facteur de conversion (N1) et calcul de la moyenne (14a),
**qu'**au moyen d'une deuxième paire de canaux de mesure (15), avec une deuxième différence de phases de canaux de mesure (Δϕ_{M2}), des différences de phases de signal d'oscillation avec erreur (Δϕ_{S,M2}) moyennées, qui contiennent des erreurs de phase sous la forme de la deuxième différence de phases de canaux de mesure (Δϕ_{M2}), sont calculées à partir des signaux d'oscillation (7, 8) par conversion analogique/numérique (11b), détection de phase (12b), filtrage passe-bas numérique (13b) avec le sous-échantillonnage ainsi produit avec un deuxième facteur de conversion (N2) et calcul de la moyenne (14b), qu'au moyen d'une troisième paire de canaux de mesure (16), avec une différence de phases de canaux de mesure négligeable, les phases de signal d'oscillation de la deuxième paire de canaux de mesure (15), mesurées après la détection de phase (12b) dans la deuxième paire de canaux de mesure (15), sont détectées et des différences de phases de signal d'oscillation avec erreur (Δϕ_{S,M3}), qui contiennent des erreurs de phase en raison de la deuxième différence de phases de canaux de mesure (Δϕ_{M2}), sont identifiées soit par filtrage passe-bas (13c) sans sous-échantillonnage, soit par filtrage passe-bas (13c) avec sous-échantillonnage avec un troisième facteur de conversion (N3), le troisième facteur de conversion (N3) étant inférieur ou supérieur au premier facteur de conversion (N2) et au premier facteur de conversion (N1), que la deuxième différence de phases de canaux de mesure (Δϕ_{M2}) est identifiée par calcul de la différence (17) entre les différences de phases de signal d'oscillation avec erreur (Δϕ_{S,M2}) moyennées qui contiennent des erreurs de phase de la deuxième paire de canaux de mesure (15) et les différences de phases de signal d'oscillation sans erreur (Δϕ_{S,M1}) ne contenant pas d'erreurs de phase de la première paire de canaux de mesure (9) et
**que** la deuxième différence de phases de canaux de mesure (Δϕ_{M2}) est soustraite des différences de phases de signal d'oscillation avec erreur (Δϕ_{S,M3}) de la troisième paire de canaux de mesure (16) et des différences de phases de signal d'oscillation sans erreur (Δϕ_{S}) ne contenant pas d'erreurs de phase sont ainsi obtenues et servent de base à l'identification du débit massique.

2. Procédé (1) selon la revendication 1, **caractérisé en ce que** l'identification des différences de phases de signal d'oscillation sans erreur (Δϕ_{S,M1}) au moyen de la première paire de canaux de mesure (9) est réalisée de telle sorte que les signaux d'oscillation (7, 8) sont traités au moyen de la première paire de canaux de mesure (9) avec un premier canal de mesure (9a) et un deuxième canal de mesure (9b) et avec une première différence de phases de canaux de mesure (Δϕ_{M1}) entre le premier canal de mesure (9a) et le deuxième canal de mesure (9b), le premier signal d'oscillation (7) et le deuxième signal d'oscillation (8) étant acheminés dans la première paire de canaux de mesure (9) du côté de l'entrée avec un premier inverseur de canaux (10), en alternance par le biais du premier canal de mesure (9a) et du deuxième canal de mesure (9b), les signaux d'oscillation (7, 8) étant soit échantillonnés après l'inverseur de canaux (10) par au moins un convertisseur analogique/numérique (11a) avec une première fréquence d'échantillonnage et les signaux d'oscillation échantillonnés étant guidé par un deuxième inverseur de canaux (10) sur leur canal de mesure (9a, 9b) originel, soit les signaux d'oscillation étant guidé après l'inverseur de canaux (10) par un deuxième inverseur de canaux (10) sur leur canal de mesure (9a, 9b) originel et ensuite échantillonnés par au moins un convertisseur analogique/numérique (11a) avec une première fréquence d'échantillonnage, et, avec au moins un détecteur de phase (12a), des premières phases de signal d'oscillation mesurées étant identifiées à partir des premiers signaux d'oscillation échantillonnés et des deuxièmes phases de signal d'oscillation mesurées étant identifiées à partir des deuxièmes signaux d'oscillation échantillonnés, une première phase de signal d'oscillation filtrée passe-bas et une deuxième phase de signal d'oscillation filtrée passe-bas étant déterminées par au moins un filtre numérique (13a) ayant une propriété passe-bas à partir d'une pluralité de premières et de deuxièmes phases de signal d'oscillation mesurées obtenues respectivement dans une position de l'inverseur de canaux, de sorte qu'un sous-échantillonnage soit donc produit avec le premier facteur de conversion (N1) dans la première paire de canaux de mesure (9), et des différences de phases de signal d'oscillation avec erreur correspondantes, qui contiennent des erreurs de phase en raison de la première différence de phases de canaux de mesure (Δϕ_{M1}), étant identifiées respectivement dans une position de l'inverseur de canaux (10) à partir de phases de signal d'oscillation filtrées passe-bas correspondantes dans le temps et des différences de phases de signal d'oscillation sans erreur (Δϕ_{S,M1}) ne contenant pas d'erreurs de phase étant calculées par calcul de la moyenne à partir de plusieurs différences de phases de signal d'oscillation avec erreur qui contiennent des erreurs de phase.

3. Procédé (1) selon la revendication 1 ou 2, **caractérisé en ce que** l'identification des différences de phases de signal d'oscillation avec erreur (Δϕ_{S,M2}) moyennées au moyen de la deuxième paire de canaux de mesure (15) est réalisée par le fait que les signaux d'oscillation (7, 8) sont traités au moyen de la deuxième paire de canaux de mesure (15) avec un premier canal de mesure (15a) et un deuxième canal de mesure (15b) et avec une deuxième différence de phases de canaux de mesure (Δϕ_{M2}) entre le premier canal de mesure (15a) et le deuxième canal de mesure (15b), le premier signal d'oscillation (7) et le deuxième signal d'oscillation (8) étant échantillonnés par au moins un convertisseur analogique/numérique (11b) avec une première fréquence d'échantillonnage et, avec au moins un détecteur de phase (12b), des premières phases de signal d'oscillation mesurées étant identifiées à partir des premiers signaux d'oscillation échantillonnés et des deuxièmes phases de signal d'oscillation mesurées étant identifiées à partir des deuxièmes signaux d'oscillation échantillonnés, une première phase de signal d'oscillation filtrée passe-bas et une deuxième phase de signal d'oscillation filtrée passe-bas étant identifiées par au moins un filtre numérique (13b) ayant une propriété passe-bas à partir d'une pluralité de premières et de deuxièmes phases de signal d'oscillation mesurées obtenues pendant une position de l'inverseur de canaux (10) de la première paire de canaux de mesure (9) dans la deuxième paire de canaux de mesure (15), de sorte qu'un sous-échantillonnage soit donc produit avec le deuxième facteur de conversion (N2) dans la deuxième paire de canaux de mesure (9), et des différences de phases de signal d'oscillation avec erreur correspondantes, qui contiennent des erreurs de phase en raison de la deuxième différence de phases de canaux de mesure (Δϕ_{M2}), étant identifiées à partir de phases de signal d'oscillation filtrées passe-bas correspondantes dans le temps et des différences de phases de signal d'oscillation avec erreur (Δϕ_{S,M2}) moyennées, qui contiennent des erreurs de phase en raison de la deuxième différence de phases de canaux de mesure (Δϕ_{M2}), étant calculées par calcul de la moyenne (14b) à partir de plusieurs différences de phases de signal d'oscillation avec erreur qui contiennent des erreurs de phase.

4. Procédé (1) selon l'une des revendications 1 à 3, **caractérisé en ce que** l'identification des différences de phases de signal d'oscillation avec erreur (Δϕ_{S,M3}) au moyen de la troisième paire de canaux de mesure (16) est réalisée de telle sorte qu'au moyen de la troisième paire de canaux de mesure (16), avec une différence de phases de canaux de mesure négligeable, à partir des premières phases de signal d'oscillation mesurées de la deuxième paire de canaux de mesure (15) et à partir des deuxièmes phases de signal d'oscillation mesurées de la deuxième paire de canaux de mesure (15), soit des premières phases de signal d'oscillation filtrées passe-bas et des deuxièmes phases de signal d'oscillation filtrées passe-bas sont identifiées au moyen d'un filtre numérique de passage (13c) ayant une propriété passe-bas, sans qu'un sous-échantillonnage soit produit dans le troisième canal de mesure, soit des premières phases de signal d'oscillation filtrées passe-bas et des deuxièmes phases de signal d'oscillation filtrées passe-bas sont identifiées par filtrage passe-bas (13c) avec sous-échantillonnage avec un troisième facteur de conversion (N3), le troisième facteur de conversion (N3) étant inférieur ou supérieur au premier facteur de conversion (N2) et au premier facteur de conversion (N1), et des différences de phases de signal d'oscillation avec erreur (Δϕ_{S,M3}), qui contiennent des erreurs de phase en raison de la deuxième différence de phases de canaux de mesure (Δϕ_{M2}), étant identifiées à partir de phases de signal d'oscillation filtrées passe-bas correspondantes dans le temps.

5. Procédé (1) selon l'une des revendications 1 à 4, **caractérisé en ce que** la fréquence d'inversion du commutateur de canaux (10) de la première paire de canaux de mesure (9) et la fréquence d'excitation (f₀) du générateur d'oscillations (4) sont accordées l'une sur l'autre de telle sorte que pendant la durée d'une position du commutateur de canaux (10), au moins une oscillation du tube de mesure est détectée, de préférence une pluralité d'oscillations du tube de mesure sont détectées, notamment de préférence entre 4 et 12 oscillations du tube de mesure sont détectées.

6. Procédé (1) selon l'une des revendications 1 à 5, **caractérisé en ce que** la fréquence d'inversion du commutateur de canaux (10) de la première paire de canaux de mesure (9), la fréquence d'échantillonnage du convertisseur analogique/numérique (11a) de la première paire de canaux de mesure (9) et/ou du convertisseur analogique/numérique (11b) de la deuxième paire de canaux de mesure (15) et la longueur du filtre numérique (13a) ayant des propriétés passe-bas de la première paire de canaux de mesure (9) et/ou du filtre numérique (13b) de la deuxième paire de canaux de mesure (15) sont accordées les unes sur les autres de telle sorte que les filtres numériques (13a, 13b) sont sensiblement entièrement remplis avec des valeurs d'échantillonnage d'une position du commutateur de canaux (10).

7. Procédé (1) selon la revendication 6, **caractérisé en ce que** les valeurs d'échantillonnage des convertisseurs analogique/numérique (11a, 11b) de la première paire de canaux de mesure (9) et/ou de la deuxième paire de canaux de mesure (15) dans la zone des instants d'inversion du commutateur de canaux (10) ne sont pas utilisées dans les filtres numériques (13a, 13b) ayant des propriétés passe-bas de la première paire de canaux de mesure (9) et/ou de la deuxième paire de canaux de mesure (15).

8. Procédé (1) selon la revendication 6 ou 7, **caractérisé en ce que** les valeurs d'échantillonnage des convertisseurs analogique/numérique (11a, 11b) de la première paire de canaux de mesure (9) et/ou de la deuxième paire de canaux de mesure (15) dans la zone des instants d'inversion du commutateur de canaux (10) sont remplacées par des zéros dans les filtres numériques (11a, 11b) ayant des propriétés passe-bas de la première paire de canaux de mesure (9) et/ou de la deuxième paire de canaux de mesure (15).

9. Procédé (1) selon l'une des revendications 1 à 8, **caractérisé en ce qu'**un filtre numérique (19) supplémentaire destiné à réaliser un sous-échantillonnage est branché à la suite des filtres numériques (13c) ayant une propriété passe-bas dans la troisième paire de canaux de mesure (16), le sous-échantillonnage étant notamment choisi avec un facteur de conversion (N4) de telle sorte que le calcul qui suit des différences de phases de signal d'oscillation avec erreur (Δϕ_{S,M3}) et des différences de phases de signal d'oscillation sans erreur (Δϕ_{S}) peut être effectué avec chaque paire de valeurs de phases de signal d'oscillation filtrées passe-bas fournies après le sous-échantillonnage.

10. Procédé (1) selon l'une des revendications 1 à 9, **caractérisé en ce que** le filtre numérique (13a) de la première paire de canaux de mesure (9) ayant des propriétés passe-bas et/ou le filtre numérique (13b) de la deuxième paire de canaux de mesure (15) ayant des propriétés passe-bas et/ou le filtre numérique (13c) de la troisième paire de canaux de mesure (16) ayant des propriétés passe-bas sont réalisés sous la forme de filtres FIR (Finite Impulse Response - à réponse impulsionnelle finie).

11. Procédé (1) selon l'une des revendications 1 à 10, **caractérisé en ce que** le premier facteur de conversion (N1) et le deuxième facteur de conversion (N2) sont égaux.

12. Débitmètre massique à effet Coriolis (2) comprenant au moins un tube de mesure (3), au moins un générateur d'oscillations (4), au moins deux enregistreurs d'oscillations (5) et au moins une unité de commande et d'interprétation (6), le tube de mesure (3) pouvant être traversé par un flux de fluide, le générateur d'oscillations (4) excitant le tube de mesure (3) en une oscillation avec une fréquence d'excitation (f₀), le premier et le deuxième enregistreur d'oscillations (5) détectant les oscillations du tube de mesure (3) du côté de l'entrée et du côté de la sortie et les fournissant sous la forme d'un premier signal d'oscillation (7) avec une première phase de signal d'oscillation (ϕ_{S1}) et sous la forme d'un deuxième signal d'oscillation (8) avec une deuxième phase de signal d'oscillation (ϕ_{S2}), l'unité de commande et d'interprétation (6) déterminant une différence de phases de signal d'oscillation (Δϕ_{S}) entre le premier signal d'oscillation (7) et le deuxième signal d'oscillation (8) et identifiant un débit massique à partir de la différence de phases de signal d'oscillation (Δϕ_{S}),
**caractérisé en ce**
**que** l'unité de commande et d'interprétation (6) est configurée de telle sorte,
**qu'**au moyen d'une première paire de canaux de mesure (9), avec une première différence de phases de canaux de mesure (Δϕ_{M1}), des différences de phases de signal d'oscillation sans erreur (Δϕ_{S,M1}), ne contenant pas d'erreurs de phase en raison du calcul de la première différence de phases de canaux de mesure (Δϕ_{M1}) moyennée, sont calculées à partir des signaux d'oscillation (7, 8) par inversion de canaux (10), conversion analogique/numérique (11a), détection de phase (12a), filtrage passe-bas numérique (13a) avec le sous-échantillonnage ainsi produit avec un premier facteur de conversion (N1) et calcul de la moyenne (14a),
**qu'**au moyen d'une deuxième paire de canaux de mesure (15), avec une deuxième différence de phases de canaux de mesure (Δϕ_{M2}), des différences de phases de signal d'oscillation avec erreur (Δϕ_{S,M2}) moyennées, qui contiennent des erreurs de phase sous la forme de la deuxième différence de phases de canaux de mesure (Δϕ_{M2}), sont calculées à partir des signaux d'oscillation (7, 8) par conversion analogique/numérique (11b), détection de phase (12b), filtrage passe-bas numérique (13b) avec le sous-échantillonnage ainsi produit avec un deuxième facteur de conversion (N2) et calcul de la moyenne, qu'au moyen d'une troisième paire de canaux de mesure (16), avec une différence de phases de canaux de mesure négligeable, les phases de signal d'oscillation de la deuxième paire de canaux de mesure (15), mesurées après la détection de phase (12b) dans la deuxième paire de canaux de mesure (15), sont détectées et des différences de phases de signal d'oscillation avec erreur (Δϕ_{S,M3}), qui contiennent des erreurs de phase en raison de la deuxième différence de phases de canaux de mesure (Δϕ_{M2}), sont identifiées soit par filtrage passe-bas (13c) sans sous-échantillonnage, soit par filtrage passe-bas (13c) avec sous-échantillonnage avec un troisième facteur de conversion (N3), le troisième facteur de conversion (N3) étant inférieur ou supérieur au premier facteur de conversion (N2) et au premier facteur de conversion (N1), que la deuxième différence de phases de canaux de mesure (Δϕ_{M2}) est identifiée par calcul de la différence (17) entre les différences de phases de signal d'oscillation avec erreur (Δϕ_{S,M2}) moyennées qui contiennent des erreurs de phase de la deuxième paire de canaux de mesure (15) et les différences de phases de signal d'oscillation sans erreur (Δϕ_{S,M1}) ne contenant pas d'erreurs de phase de la première paire de canaux de mesure (9) et
**que** la deuxième différence de phases de canaux de mesure (Δϕ_{M2}) est soustraite des différences de phases de signal d'oscillation avec erreur (Δϕ_{S,M3}) de la troisième paire de canaux de mesure (16) et des différences de phases de signal d'oscillation sans erreur (Δϕ_{S}) ne contenant pas d'erreurs de phase sont ainsi obtenues et servent de base à l'identification du débit massique.

13. Débitmètre massique à effet Coriolis (2) selon la revendication 12, **caractérisé en ce que** l'unité de commande et d'interprétation (6) est configurée de sorte que lors du fonctionnement du débitmètre massique à effet Coriolis (2), elle met en œuvre le procédé (1) selon l'une des revendications 2 à 11.
